# EUROPÄISCHE PATENTANMELDUNG

(11) **EP 1 418 063 A2**
(43) Veröffentlichungstag der Anmeldung: **12.05.2004**
(21) Anmeldenummer: 04003345.8
(22) Anmeldetag: 17.08.1999
(51) Int. Cl.: B60B 15/26, B60C 27/04

(54) **Gleitschutzvorrichtung, insbesondere für luftbereifte Fahrzeugräder auf Eis- und Schneeflächen**

(30) Priorität: 15.09.1998 DE 29816502 U; 16.06.1999 DE 29910533 U; 16.06.1999 DE 29910534 U; 30.07.1999 DE 29913258 U
(62) Teilanmeldung aus: 99116111.8
(71) Anmelder: Confon AG, CH-9424 Rheineck SG (CH)
(72) Erfinder: Preusker, Werner, 88605 Sauldorf (DE)
(74) Vertreter: Richter, Werdermann, Gerbaulet & Hofmann

(57) **Zusammenfassung**

Bei einer Gleitschutzvorrichtung, für luftbereifte Fahrzeugräder für Eisund Schneeflächen, die einseitig an dem Fahrzeugrad gehalten ist und die eine Anzahl von an einem Trägerelement (10) angeordneten, die Reifenlauffläche (111) teilweise übergreifenden, armartigen Greifelementträgern (50) mit an ihren freien Enden vorgesehenen Greifelementträgern (50) mit an ihren freien Enden vorgesehenen Greifelementen (50a) aufweist, sind für eine wechselseitige Schwenkbewegung der Greifelementträger (50) mit ihren Greifelementen (50a) um einen innerhalb oder außerhalb des Mittelpunktes des Trägerelementes (10) liegenden Mittelpunkt an dem Trägerelement (10) eine der Anzahl der Greifelementträger (50) entsprechende Anzahl von Drehlagern (30) mit mindestens einer außermittig eines jeden Drehlagers (30) vorgesehenen schlitzförmigen Durchbrechung (20) zum Einstecken des freien, eine Z-förmige Profilierung aufweisenden Endes des Greifelementträgers (50) angeordnet, so dass die Greifelementträger (50) um quer zur Mittelachse des Trägerelementes (10) verlaufende Schwenkachsen zum Verschwenken der Greifelementträger (50) auf die Reifenlauffläche (111) verschwenkbar sind, und dass der Befestigungsbereich (55) eines jeden Greifelementträgers (50) an dem Drehlager (30) in radialer Richtung zu der Reifenlauffläche (111) zur Anpassung der Gleitschutzvorrichtung (100) an verschiedene Reifengrößen durch Verdrehen eines jeden Drehlagers (30) die schlitzförmige Durchbrechung (20) lageveränderbar ausgebildet ist und eine reifenlaufflächennahe oder eine reifenlaufflächenfeme Position einnimmt.

## Beschreibung

Die Erfindung betrifft eine Gleitschutzvorrichtung, insbesondere für luftbereifte Fahrzeugräder auf Eis- und Schneeflächen gemäß dem Oberbegriff des Anspruches 1.

Eine solche Gleitschutzvorrichtung ist durch die im Oberbegriff berücksichtigte US-A-32 83 797 bekannt. Diese Gleitschutzvorrichtung besteht aus einem außerhalb des Mittelpunktes des Rades angeordneten stabförmigen Trägerelement, das von drei gleich langen armartigen Abschnitten gebildet wird, die an den Enden des mittleren armartigen Abschnittes vermittels Drehlager derart verschwenkbar angeordnet sind, dass die beiden seitlichen armartigen Abschnitte um ihre Drehlager verschwenkt werden können, bis die freien Enden der beiden seitlichen armartigen Abschnitte zur Anlage gebracht sind; in dieser Stellung werden diese armartigen Abschnitte mit ihren Enden miteinander verriegelt, so dass sich aus den drei armartigen Abschnitten ein dreieckförmiges Trägerelement mit gleich langen Seiten ergibt. Jeder armartige Abschnitt dieses Trägerelementes trägt auswärtsgerichtete Greifelementträger mit einem in etwa dreieckförmigen Profil, das mit seiner Basis der Reifenlauffläche des Rades zugekehrt ist und ein die Reifenlauffläche übergreifendes Greifelement trägt; das aus einem rechteckförmigen Rahmen besteht, dessen Seiten stegartige Profile trägt, die aus der Reifenlauffläche herausstehen.

Die Greifelementträger dieser Gleitschutzvorrichtung sind an den armartigen Abschnitten des Trägerelementes um parallel zur Radachse liegende Schwenkachsen und um quer zur Radachse verlaufende Schwenkachsen verschwenkbar. Eine derart ausgebildete Gleitschutzvorrichtung ist aufgrund ihrer konstruktiven Ausgestaltung ausschließlich für drei Greifelementträger vorgesehen. Eine Anpassung der Vorrichtung an unterschiedliche Reifengrößen ist nicht möglich, da die Lagerpunkte für die Gleitmittelträger festgelegt und in ihren Abständen von der Reifenlauffläche nicht veränderbar sind.

Des weiteren ist eine Gleitschutzvorrichtung zur Erhöhung der Griffigkeit von Fahrzeugrädern durch die US-A-2,443,261 bekannt. Diese Gleitschutzvorrichtung ist an den Radfelgen von Kraftfahrzeugen anbringbar und besteht aus einer Grundscheibe und einer um ihren Mittelpunkt drehbaren Ringscheibe, an der Schwenkhebel zum Ein- und Ausschwenken von dreieckförmigen Gleitschutzarmen angelenkt sind, die an der Grundscheibe drehbar befestigt sind, so dass bei einer Drehung der Ringscheibe die Gleitschutzarme aus einer gegenüber dem Reifenumfang zurückgezogenen Stellung in eine radiale Betriebsstellung ausschwenkbar sind, wodurch die spitzenförmigen Endabschnitte aus der von der Reifenlauffläche gebildeten Ebene herausragen und in den Untergrund eingreifen können. Bei dieser bekannten Gleitschutzvorrichtung liegen die Gleichschutzarme auch in der ausgeschwenkten Stellung neben der Reifenseitenfläche und übergreifen in keiner Weise die Reifenlauffläche, so dass die Erhöhung der Griffigkeit der Fahrzeugräder nicht durch unmittelbares Einwirken des Reifens bzw. dessen Lauffläche auf die Gleitschutzarme und der Gleitschutzarme auf die Bodenfläche erfolgt. Die Gleitschutzarme stellen bei Betrieb keinen integrierten Bestandteil des Reifens dar, um eine Wirkung zu erreichen, die der von in das Laufflächenprofil eines Reifens eingelassene Spikes entspricht.

Eine weitere, mit der FR-A-1 368 348 bekannt gewordene Antirutschvorrichtung für Kraftfahrzeugreifen besteht aus einer Anzahl von armartigen Halterungen, die mittels einer Grundscheibe an der Felge eines jeden Kraftfahrzeuges anbringbar sind, wobei die armartigen Halterungen die Radlauffläche sowohl in der Betriebsstellung als auch bei Nichtgebrauch ständig übergreifen.

Eine weitere, in der US-A-2 610 898 beschriebene Gleitschutzvorrichtung besteht aus einer Vielzahl von spikeartigen Rippen bzw. Zähnen, die seitlich neben dem Reifen in eine Betriebsstellung ausfahrbar sind, jedoch die Lauffläche des Reifens nicht übergreifen. Das Ein- und Ausschwenken der radial angeordneten Gleitschutzarme erfolgt unter Verwendung einer verdrehbaren, an der Felge eines Kraftfahrzeuges anbringbaren Scheibe. Die bei diesem Gleitschutz verwendeten Gleitschutzarme sind nicht federnd-elastisch, sondern starr ausgebildet, da sie bei der Umdrehung des Rades in die eis- oder schneebedeckte Fläche des Untergrundes eingreifen müssen.

Durch die AT-A-325 435 ist ferner ein abnehmbarer Gleitschutz für Fahrzeugräder, vorzugsweise für Fahrzeug-Luftreifenräder, mit einem oder mehreren, auf der Lauffläche des Radreifens aufliegenden Gleitschutzbügeln, die in an der Felgenaußenseite angebrachte Befestigungshülsen radial einschiebbar und an diesen mittels einer Sperrvorrichtung fixierbar sind und das Profil des Reifens auch an der zum Fahrzeug gerichteten Seite umfassen, bekannt geworden, bei dem die Sperrvorrichtung aus mindestens einem, vorzugsweise aus zwei, einander entgegengesetzt wirkenden, parallel zur Radebene angeordneten Sperrhaken besteht, die an dem Gleitschutzbügel angelenkt sind, wobei am äußeren freien Ende der Sperrhaken Nasen nach dem vollständigen Einschieben der Gleitschutzbügel in die Befestigungshülsen an deren, der Radnabe zugewandten Enden einrasten, und durch Federn in Sperrstellung gehalten werden, wodurch ein Gleitschutz geschaffen sein soll, der die Radialbewegung des Radumfanges mitmacht, so dass die Stoßdämpfung des Fahrzeugrades nicht behindert wird. Dieses Gleitschutzvorrichtung besteht aus zwei wesentlichen Teilen, nämlich aus an der Felgenaußenseite angebrachten Befestigungshülsen und aus in diese radial einschiebbaren die Lauffläche des Radreifens übergreifenden Gleitschutzbügeln, wobei die Befestigungshülsen mit den Gleitschutzbügeln keine unlösbare Einheit bilden.

Die DE-A-27 59 899 beschreibt ein bereiftes, insbesondere luftbereiftes Fahrzeugrad mit einer Gleitschutzvorrichtung, bei dem die Vorrichtung zur Aufnahme der Gleitschutzvorrichtung Bestandteil des Rades ist. Diese Gleitschutzvorrichtung weist hierbei ein mit dem Rad verbundenes radkappen- und scheibenartiges Traggehäuse als Bauteil aus einer Grundscheibe und einer gegenüber dieser verdrehbaren Ringscheiben mit mindestens zwei in diesem Traggehäuse angeordneten ein- und ausschwenkbaren Gleitschutzarmen auf, während die Grundscheibe des Traggehäuses unlösbar mit dem Rad verbunden ist und einen Bestandteil des Rades bildet. Dadurch, dass die Gleitschutzvorrichtung integrierter Bestandteil des Rades ist, ist ein müheloses Abnehmen der Gleitschutzvorrichtung bei Nichtgebrauch nicht möglich.

Die DE-A-83 27 385 beschreibt eine Gleitschutzvorrichtung, insbesondere für luftbereifte Fahrzeugräder auf Eis- und Schneeflächen, die aus einer an der Radscheibe bzw. Felge befestigbaren Tragscheibe mit einer Anzahl von in gleichem Abstand voneinander radial verlaufenden und um parallel zur Radscheibenlagerachse verlaufenden Achse verschwenkbaren oder feststehenden Gleitschutzarmen aus einem vorgebogenen, die Reifenlauffläche übergreifenden und außenseitig in ihren freien Enden ein Greifprofil oder Spikes tragenden Profil aus einem Kunststoff oder einem anderen geeigneten Werkstoff besteht, wobei die Gleitschutzvorrichtung zur Befestigung der Tragscheibe eine mit der Radscheibe bzw. Felge verbundene Befestigungsscheibe aufweist, die mit verriegelbaren Halterungen für die Tragscheibe versehen ist, wohingegen die Befestigungsscheibe unlösbar mit der Radscheibe bzw. Felge verbunden ist und einen Bestandteil des Rades bildet.

Durch die EP-A-0 745 494 ist eine Gleitschutzvorrichtung bekannt, deren Ausgestaltung keine Anpassung der armartigen Greifelementträger an unterschiedliche Reifengrößen ermöglicht. Diese Gleitschutzvorrichtung sieht eine Stützvorrichtung bei einem Gleitschutz für Fahrzeugräder mit in regelmäßigen Abständen über den Reifen verteilten Bügeln vor, die die Reifenlauffläche übergreifen und an der an der Radaußenseite angeordneten Stützvorrichtung befestigt sind, wobei die Ausgestaltung derart ist, dass die ring- oder scheibenförmige Stützvorrichtung nur von den Bügeln oder nur von diesen und von Gleitschutzmitteln gehalten ist, wobei die Stützvorrichtung bei begrenzter Elastizität eine solch hohe Eigen- und Formstabilität besitzt, dass jeder Bügel in beiden radialen Richtungen elastisch gehalten ist, wobei die Bügel gegen ein Abrutschen nach außen durch Haltemittel gesichert sind. Bei dieser Gleitschutzvorrichtung können die Außenflächen der die Reifenlauffläche übergreifenden Bügelenden Spikes tragen. Auch können die Bügel über Kettenglieder miteinander verbunden sein.

Alle bekannten Gleitschutzvorrichtungen haben radial verlaufende, an einem Stützring oder einer Tragscheibe lageunveränderbar angeordnete Arme mit vorgegebener Länge, die gemeinsam mit ihren freien Enden die Reifenlauffläche übergreifen oder umgreifen. Aufgrund der vorgegebenen Armlänge und aufgrund eines in seiner Lage nicht veränderbaren Befestigungspunkt für die Arme sind diese Gleitschutzvorrichtungen nur für eine Reifengröße einsetzbar.

Eine Anpassung der Länge der Arme an verschiedene Reifengrößen ist nicht möglich. Ein Händler muss daher Gleitschutzvorrichtungen mit einer Anzahl von Armen mit unterschiedlichen Längen vorrätig halten, um den Kunden Gleitschutzvorrichtungen mit einer Armlänge in Anpassung an die Reifengröße des Fahrzeuges des Kunden liefern zu können.

Der Erfindung liegt die Aufgabe zugrunde, eine Gleitschutzvorrichtung der eingangs genannten Art zu schaffen, die sowohl vom Händler als auch vom Fahrzeugbesitzer mühelos an Fahrzeugreifen mit unterschiedlichen Größen montierbar ist, wobei die Größenverstellung der Gleitschutzvorrichtung in Anpassung an die jeweiligen Reifengrößen ohne großen technischen Aufwand und ohne eine Verwendung von armartigen Greifelementträgern mit unterschiedlichen Längen, sondern lediglich durch die Veränderung des Abstandes des Befestigungspunktes des Greifelementträgers von der Reifenlauffläche durchführbar ist. Des weiteren soll die Gleitschutzvorrichtung flach zusammenlegbar sein; für eine leichte Montage der Gleitschutzvorrichtung an einem Fahrzeugrad sollen die armartigen Greifelementträger in einem gewissen Bereich pendelartig verschwenkbar sein und leicht montierbar und auswechselbar sein, was besonders vorteilhaft ist, wenn die Gleitschutzvorrichtung als Bausatz angeboten wird und wenn verschlissene Greifelementträger gegen neue ausgewechselt werden müssen. Des weiteren ist es Aufgabe der Erfindung, die die Greifelemente die Reifenlauffläche teilweise übergreifenden armartigen Greifelementträger so auszugestalten, dass eine Leistungserhöhung und ein sanfteres Abstellen des Fahrzeugrades bei angelegter Gleitschutzvorrichtung erreicht wird.

Diese Aufgabe wird durch die im Anspruch 1 gekennzeichneten Merkmale gelöst.

Hiernach besteht die Erfindung darin, dass jeder Greifelementträger der Gleitschutzvorrichtung mit dem Trägerelement oder dem Ringkörper des ringfömig ausgebildeten Trägerelementes lösbar verbunden ist, wobei jeder Greifelementträger in seinem Befestigungsbereich vermittels einer Steckverbindung an einer an oder in der Trägerelementfläche oder in der Ringfläche des ringförmig ausgebildeten Trägerelementes angeordneten, um eine senkrecht zu der Trägerelementfläche oder zu der Ringfläche des Trägerelementes stehende Achse bei an dem Rad oder der Radfelge befestigter Gleitschutzvorrichtung vorgesehenen Drehlager als Lager für die Greifelementträger befestigt ist, das außermittig mindestens eine schlitzförmige Durchbrechung zum Einführen und Befestigen des Greifelementträgers mit seinem der Reifenlauffläche abgekehrten Ende (50b) mittels der Steckverbindung aufweist, so dass der Befestigungsbereich eines jeden Greifelementträgers an dem Drehlager in radialer Richtung zu der Reifenlauffläche zur Anpassung der Gleitschutzvorrichtung an verschiedene Reifengrößen durch Verdrehen eines jeden Drehlagers die schlitzförmige Durchbrechung lageveränderbar ausgebildet ist und eine reifenlaufflächennahe oder eine reifenlaufflächenferne Position einnimmt.

Jedes Drehlager weist mindestens eine zentrische Aufnahme zur Halterung des Greifelementträgers auf. Zur Durchmesserveränderung der Gleitschutzvorrichtung weist jedes Drehlager mindestens eine exzentrische Aufnahme zur Halterung des Greifelementträgers auf. Nach einer weiteren Ausführungsform weist jedes Drehlager je mindestens eine zentrische Aufnahme und zur Durchmesserveränderung der Gleitschutzvorrichtung mindestens eine exzentrische Aufnahme zur Halterung des Greifelementträgers auf. Jedes Drehlager kann ferner mehrere Aufnahmen für einen Greifelementträger aufweisen. Auch ist eine Ausgestaltung möglich, bei der das Drehlager mit einer zentrischen Aufnahme und mit mehreren exzentrischen Aufnahmen für den Greifelementträger versehen ist.

Der Dreh- bzw. Verschwenkbereich eines jeden Drehlagers ist seitlich begrenzt.

Die Erfindung sieht ferner vor, dass jeder Greifelementträger der Gleitschutzvorrichtung lösbar mit dem Trägerelement verbunden ist, wobei jeder Greifelementträger in seinem Befestigungsbereich vermittels einer Steckverbindung an oder in der Trägerelementfläche oder an oder in der Ringfläche des ringförmig ausgebildeten Trägerelementes angeordneten, um eine senkrecht zu der Trägerelementfläche oder Ringfläche des ringförmig ausgebildeten Trägerelementes stehende Achse bei an dem Rad oder der Radfelge befestigter Gleitschutzvorrichtung vorgesehenen Drehlager befestigt ist, das außermittig mindestens eine erste schlitzförmige Durchbrechung und mittig eine parallel zu der außermittig angeordneten Durchbrechung verlaufende zweite schlitzförmige Durchbrechung zum Einführen des Greifelementträgers mit seinem der Reifenlauffläche abgekehrten Ende aufweist, so dass der Befestigungsbereich eines jeden Greifelementträgers in der ersten schlitzförmigen Durchbrechung des Drehlagers in radialer Richtung zu der Reifenlauffläche zur Anpassung der Gleitschutzvorrichtung an verschiedene Reifengrößen durch Verdrehen eines jeden Drehlagers in dem Trägerelement die erste schlitzförmige Durchbrechung lageveränderbar ausgebildet ist und eine reifenlaufflächennahe oder eine reifentauffiächenferne Position einnimmt.

Eine weitere vorteilhafte Ausführungsform sieht vor, dass das freie, in der schlitzförmigen Durchbrechung in dem als Haltescheibe ausgebildeten Drehlager gehaltene Ende eines jeden Greifelementträgers zum Herausklappen der Greifelementträger aus der eingeklappten Nichtbetriebsstellung in die ausgeschwenkte Betriebsstellung und zum Einklappen aus dieser in die Nichtbetriebsstellung eine Z-förmige Profilausgestaltung mit einem in einem rechten Winkel zu dem geradlinig verlaufenden Abschnitt des Greifelementträgers abgebogenen ersten Endabschnitt und mit einem in einem rechten Winkel zu dem ersten Endabschnitt abgebogenen und parallel zu dem geradlinig verlaufenden Abschnitt verlaufenden zweiten Endabschnitt aufweist, wobei der Greifelementträger in seinem dem Trägerelement zugekehrten Ende zwischen dem Trägerelement und der Reifenseitenwandfläche in die schlitzförmige Durchbrechung so eingeführt ist, dass sich der zweite Endabschnitt der Z-förmigen Profilausgestaltung des Endes des Greifelementträgers auf der Außenwandfläche der Trägerelementfläche oder der Ringfläche des Trägerelementes oder auf der Außenwandfläche des Drehlagers abstützt, wobei sich der Greifelementträger im Übergangsbereich seines geradlinig verlaufenden Abschnittes mit dem ersten abgewinkelten Endabschnitt der Z-förmigen Profilausgestaltung des Endes des Greifelementträgers an der dem Rand zugekehrten Wandfläche des Trägerelementes vermittels einer wulstartigen Abstützfläche abstützt, die an der die schlitzförmige Durchbrechung begrenzenden Wand vorgesehen ist.

Danach ergibt sich bei einer erfindungsgemäßen Gleitschutzvorrichtung, insbesondere für luftbereifte Fahrzeugräder für Eis- und Schneeflächen, die einseitig an dem Fahrzeugrad gehalten ist und die eine Anzahl von an einem Trägerelement angeordneten, die Reifenlauffläche teilweise übergreifenden, armartigen Greifelementträgern mit an ihren freien Enden vorgesehenen Greifelementen aufweist, dass für eine wechselseitige Schwenkbewegung der Greifelementträger mit ihren Greifelementen um einen innerhalb oder außerhalb des Mittelpunktes des Trägerelementes liegenden Mittelpunkt an dem Trägerelement eine der Anzahl der Greifelementträger entsprechende Anzahl von Drehlagern mit mindestens einer außermittig eines jeden des Drehlagers vorgesehenen schlitzförmigen Durchbrechung zum Einstecken des freien, eine Z-förmige Profilierung aufweisenden Ende des Greifelementträgers vorgesehen sind, so dass die Greifelementträger um quer zur Mittelachse des Trägerelementes verlaufene Schwenkachsen zum Verschwenken der Greifelementträger auf die Reifenlauffläche verschwenkbar sind und dass der Befestigungsbereich eines jeden Greifelementträgers an dem Drehlager in radialer Richtung zu der Reifenlauffläche zur Anpassung der Gleitschutzvorrichtung an verschiedene Reifengrößen durch Verdrehen eines jeden Drehlagers die schlitzförmige Durchbrechung lageveränderbar ausgebildet ist und eine reifenlaufflächennahe oder eine reifenlaufflächenferne Position einnimmt.

Eine derart erfindungsgemäß ausgebildete Gleitschutzvorrichtung erbringt folgende Vorteile:
- Anstelle der bekannten Schraubverbindungen zur Befestigung der Greifelementträger an einem Trägerelement, z. B. in Form eines Ringkörpers von Gleitschutzvorrichtungen sind bei der erfindungsgemäßen Gleitschutzvorrichtung die Greifeelementträger mittels einer Steckund/oder Schwenkverbindung an dem Trägerelement gehalten, wobei die Greifelementträger für den Gebrauch aus einer an das Trägerelement herangeklappten Position in die Gebrauchsstellung herausgeklappt und bei Nichtgebrauch an das Trägerelement heranklappbar und darüber hinaus im Gebrauchszustand pendelartig um ihren Befestigungspunkt an dem Trägerelement verschwenkbar sind.
- Durch Umstecken der Greifelementträger der Gleitschutzvorrichtung in verschiedenen Abständen von der Reifenlauffläche vorgesehenen schlitzförmigen Durchbrechungen zum Einführen und Halten der Greifelementträger mit ihren freien Enden oder durch Veränderung der Abstandsposition mindestens einer schlitzförmigen Durchbrechung von der Reifenlauffläche durch Verdrehen des die Steckverbindung für die Arme, d. h. die schlitzförmigen Durchbrechungen, aufweisenden Drehlagers, ist bei gleichbleibender Länge der Greifelementträger eine Anpassung an verschiedene Reifengrößen möglich.
- Die Greifelementträger der Gleitschutzvorrichtung sind um ihren Befestigungspunkt an dem Trägerelement wechselseitig zum Umfang der Reifenlauffläche verschwenkbar und/oder um eine quer zur Mittelachse des Trägerelementes liegende Schwenkachse an die Innenseite des Trägerelementes klappbar.
- Durch die zum Mittelpunkt des Trägerelementes außermittige, exzentrische Anordnung mindestens eines Drehlagers und/oder einer schlitzförmigen Durchbrechung in dem Drehlager in dem Trägerelement für jeden Greifelementträger der Gleitschutzvorrichtung ist es durch Verdrehen des Drehlagers möglich, den Befestigungspunkt für den Greifelementträger in seiner Lage derart zu verändern, dass der Befestigungspunkt einmal eine reifenlaufflächennahe oder eine reifenlaufflächenferne Position einnimmt, so dass beispielsweise zwei verschiedene Reifengrößen bedient werden können.
- Eine einzige Gleitschutzvorrichtung ist somit für verschiedene Reifengrößen verwendbar.
- Der Händler braucht nicht mehr mehrere Größen an Gleitschutzvorrichtungen vorrätig halten.
- Während bei den herkömmlichen Gleitschutzvorrichtungen drei verschiedene Größen an Trägerelementen und drei verschiedene Längen an Greifelementträgern mit Greifelementen, d. h. somit sechs Teile vorrätig gehalten werden müssen, reduziert sich die Anzahl der auf Lager zu haltenden Teile, z. B. auf drei Trägerelemente mit unterschiedlichen Größen und einen Greifelementträger vorgegebener Länge, so dass auch mit diesen vier Teilen sechs verschiedene Reifengrößen bedient werden können.
- Da bevorzugterweise das Trägerelement und die Greifelementträger aus Kunststoffen bestehen, entfallen jegliche Metallteile.
- Die Größenverstellung der Gleitschutzvorrichtung zur Anpassung an unterschiedliche Reifengrößen ist mühelos sowohl vom Händler und vom Monteur als auch vom Käufer durchführbar.
- Die Teile der Gleitschutzvorrichtung, wie Trägerelement und Greifelementträger, können einzeln vom Kunden erworben und baukastenartig selbst mühelos zusammengesteckt werden, wobei der Kunde gleichzeitig eine Größenanpassung an die vorhandenen Reifen vornehmen kann.
- Dadurch, dass jeder Greifelementträger der Gleitschutzvorrichtung vermittels einer Steckverbindung in den jeweiligen Schlitzen in der Ringfläche des Trägerelementes oder in dem Drehlager gehalten ist, ist eine mühelose Montage der Greifelementträger an dem Trägerelement und auch ein müheloses Abnehmen der Greifelementträger von dem Trägerelement möglich, wenn im letzteren Fall beschädigte Greifelementträger ausgetauscht werden müssen.
- Dadurch, dass jeder Greifelementträger der Gleitschutzvorrichtung in seiner Steckverbindung um eine quer zur Längsachse eines jeden Greifelementträgers verlaufende Schwenkachse verschwenkbar ist, sind im Nichtbetriebszustand der Gleitschutzvorrichtung alle Greifelementträger in Richtung zu dem Trägerelement auf dieses klappbar, so dass für das Mitführen der Gleitschutzvorrichtung in einem Fahrzeug, für die Aufbewahrung der Gleitschutzvorrichtung und für die Vorratshaltung der Gleitschutzvorrichtung wenig Raum erforderlich ist.
- Durch die Verdrehbarkeit des Drehlagersn für die Befestigung der Greifelementträger sind diese pendelartig seitlich verschwenkbar, was die Montage der Gleitschutzvorrichtung wesentlich erleichtert.

Vorteilhafte Ausgestaltungen der Erfindung sind in den Unteransprüchen gekennzeichnet.

So sieht die Erfindung eine weitere verbesserte Ausführungsform vor, nach der das freie in der schlitzförmigen Durchbrechung in dem Schlitten, in der Ringfläche des Trägerelementes oder in dem Drehlager gehaltene Ende eines jeden Greifelementträgers der Gleitschutzvorrichtung eine Z-förmige Profilausgestaltung mit einem in einem rechten Winkel zum geradlinig verlaufenden Abschnitt des Greifelementträgers abgebogenen ersten Endabschnitt und mit einem in einem rechten Winkel zu dem ersten Endabschnitt abgebogenen und parallel zu dem geradlinig verlaufenden Abschnitt des Greifelementträgers verlaufenden zweiten Endabschnitt aufweist, wobei der Greifelementträger mit seinem Ende zwischen dem Trägerelement und der Reifenseitenwandfläche in die Durchbrechung so eingeführt ist, dass sich der zweite Endabschnitt des Greifelementträgers auf der Außenseite der Ringfläche des Trägerelementes oder auf der Außenseite des Drehlagers abstützt, wobei sich der Greifelementträger mit seinem geradlinig verlaufenden Abschnitt an der dem Rad zugekehrten Wandfläche des Trägerelementes bzw. Ringkörpers abstützt, der radseitig mit einer wulstartigen Abstützfläche versehen ist. Aufgrund dieser Ausgestaltung ist jeder Greifelementträger der Gleitschutzvorrichtung in seiner Halterung bzw. Befestigungsbereich um eine quer zur Längsrichtung des Greifelementträgers verlaufende Achse verschwenkbar.

Des weiteren ist nach der Erfindung jedes Drehlager mit seinem Greifelementträger bei einem Verschwenken des Greifelementträgers aus seiner radialen Reifenanlageposition um die senkrecht zum Drehlager stehende Mittelachse des Drehlagers selbsttätig in die Position zurückverschwenkbar, in der der Greifelementträger seine radiale Anlageposition an dem Reifen einnimmt, wobei das Zurückverschwenken eines jeden Drehlagers mit seinem Greifelementträger um eine senkrecht zu dem Trägerelement stehende Mittelachse des Drehlagers in seine radiale Reifenanlageposition aus einer zur Mittelachse des Drehlagers verschwenkten Position vermittels Federkräfte erfolgt.

Für das Zurückverschwenken eines jeden Drehlagers mit seinem Greifelementträger um eine senkrecht zu dem Trägerelement stehende Mittelachse des Drehlagers in eine radiale Reifenanlageposition für den Greifelementträger aus einer zu der Mittelachse des Drehlagers verschwenkten Position weist die das Drehlager aufnehmende Durchbrechung nach der Erfindung in der Ringfläche des z. B. als Stützring ausgebildeten Trägerelementes eine ovale bzw. ellipsenartige Form auf, wobei auch das in der Durchbrechung gehaltene Drehlager für den Greifelementträger eine ovale bzw. ellipsenartige Form aufweist, wobei die Größe des ovalen bzw. ellipsenartigen Drehlagers gegenüber der Größe der ovalen bzw. ellipsenartigen Durchbrechung derart bemessen ist, dass die Lage der Hauptachse des Drehlagers kleiner gegenüber der Länge der Hauptsache der Durchbrechung in der Ringfläche des Ringkörpers des ringförmig ausgebildeten Trägerelementes und die Länge der Nebenachse des Drehlagers kleiner oder mindestens der Länge der Nebenachse der Durchbrechung in der Ringfläche des Ringkörpers ist. Aufgrund dieser Ausgestaltung kann sich das Drehlager nur in einem bestimmten und vorgegebenen Bereich Verdrehen mit der Folge, dass, wenn nach einer erfolgten Verdrehung das Drehlager an der Innenwandfläche der Durchbrechung zur Anlage kommt, dann ein weiteres Verdrehen des Drehlagers nicht mehr möglich ist; im Gegenteil aufgrund der federnd-elastischen Materialeigenschaften des eingesetzten Kunststoffes federt quasi das Drehlager wieder in seine Ausgangsposition zurück, in der jeder Greifelementträger eine radiale Stellung zur Reifenwandfläche einnimmt.

Eine einfache durch Einstecken herstellbare und funktionssichere Verbindung zwischen Greifelementträger und Trägerelement erzielt man dadurch, dass das erste Ende der Greifelementträger eine Z-förmige Profilgestaltung mit einem an das zweite Ende des Greifelementträgers angrenzenden, geradlinig verlaufenden Abschnitt des Greifelementträgers, mit einem in einem rechten Winkel zu dem geradlinig verlaufenden Abschnitt des Greifelementträgers abgebogenen ersten Endabschnitt und mit einem in einem rechten Winkel zu dem ersten Endabschnitt abgebogenen parallel zu dem geradlinig verlaufenden Abschnitt verlaufenden zweiten Endabschnitt aufweist.

Zur Verbesserung der Abrollfähigkeit und zur Leistungserhöhung ist die Gleitschutzvorrichtung derart ausgebildet, dass das abgebogene, auf der Reifenlauffläche anliegende Ende (Greifelement) eines jeden Greifelementträgers gabelartig bzw. V-förmig ausgebildet und zwei etwa parallel zueinander verlaufende Schenkel mit einem zwischen den Schenkeln liegenden U-förmigen Zwischenraum aufweist, wobei die einander zugekehrten Längskanten der Schenkel parallel zueinander verlaufen und die äußeren Längsseitenkanten der Schenkel schräg verlaufend zu der Radachse sind. Die Gleitschutzvorrichtung kann hierfür jedoch auch so ausgebildet sein, dass das abgebogene, auf der Reifenlauffläche anliegende Ende eines jeden Greifelementträgers gabelartig bzw. V-förmig ausgebildet ist, wobei die beiden Schenkel des Endes des Greifelernentträgers derart gespreizt ausgebildet sind, dass sie sich unter Ausbildung eines etwa V-förmigen Zwischenraumes zur Innenseite des Rades hin konisch erweitern, so dass die Schenkel schräg zu der Radachse verlaufend sind, wobei die äußeren Längsseitenkanten und die einander zugekehrten inneren Längskanten in etwa parallel zueinander verlaufen.

Dabei ist besonders vorteilhaft die Anordnung von vier Spikes an den Schenkeln des Greifelementes derart, dass die Spikes des einen Schenkels und die Spikes des anderen Schenkels zueinander versetzt sind, wobei die jeweils sich gegenüberliegenden Spikes auf einer Linie liegen, die zur Mittellängsachse des Gleitelementes schräg verlaufend ist.

Besonders vorteilhaft ist dabei die zueinander versetzte Anordnung der beiden Spikes des einen Schenkels zu den beiden Spikes des anderen Schenkels des Greifelementträgers insofern, als eine hohe Griffigkeit der Spikes im Eis und festgefahrener Schneedecke erreicht wird, da auch bei einer etwaigen Verformung des plattenförmigen Greifelementträgers bei Oberflächenunebenheiten einige der Spikes in das Eis oder die Schneedecke eingreifen, so dass immer eine ausreichende Bodenhaftung des Fahrzeugrades gewährleistet ist.

Ausführungsbeispiele der Erfindung werden nachstehend anhand der Zeichnungen einer Gleitschutzvorrichtung näher erläutert. Es zeigen:
- Fig. 1: in einer Ansicht von oben einen Abschnitt der Gleitschutzvorrichtung mit an ihrem als Ringkörper ausgebildeten Trägerelement angeordneten, um senkrechte Achsen zum Trägerelement verschwenkbaren Greifelementträgern mit an ihren Enden tragenden Greifelementen,
- Fig. 2: einen senkrechten Schnitt durch eine an einer Radfelge befestigte Gleitschutzvorrichtung mit einem an ihrem Trägerelement angeordneten, Greifelementträger mit einem auf der Reifenlauffläche anliegenden Spikes tragenden Greifelement,
- Fig. 3: einen senkrechten Schnitt durch das Trägerelement mit eingeklapptem Greifelementträger,
- Fig. 3A und 3B: vergrößerte schaubildliche Ansichten eines bajonettartig ausgebildeten Drehlagers,
- Fig. 4: in einer Ansicht von oben das dem Spikes tragenden Greifelement abgekehrte Befestigungsende des Greifelementträgers mit beidseitig auskragenden Rastnocken,
- Fig. 5: in einer Ansicht von oben einen Abschnitt des Trägerelementes mit einem an einem, in dem Trägerelement gehaltenen Drehlager mit einer außermittig zu dem Drehlager in dieser ausgebildeten schlitzförmigen Durchbrechung mit in diese eingestecktem Greifelementträger in einer Position, in der der Befestigungsbereich des Greifelementträgers an dem Drehlager eine reifenlaufflächenferne Position einnimmt,
- Fig. 6: in einer Ansicht von oben einen Abschnitt des Trägerelementes mit einem an einem verdrehbaren, in dem Trägerelement gehaltenen Drehlager mit einer außermittig zu dem Drehlager in diesem ausgebildeten schlitzförmigen Durchbrechung mit in diese eingestecktem Greifelement in einer Position, in der der Befestigungsbereich des Greifelementträgers an dem Drehlager eine reifenlaufflächennahe Position einnimmt,
- Fig.7: in einer schematischen Ansicht ein in dem Trägerelement verdrehbar gehaltenen Drehlager mit einer außermittig in dem Drehlager ausgebildeten schlitzförmigen Durchbrechung zur Befestigung des Greifelementträgers mit seinem dem Drehlager zugekehrten Ende vermittels einer Steckverbindung, wobei die schlitzförmige Durchbrechung eine der Reifenlauffläche abgekehrte Position für kleine Reifengröße einnimmt,
- Fig. 8: in einer schematischen Ansicht ein in dem Trägerelement verdrehbar gehaltenes Drehlager mit einer außermittig in dem Drehlager ausgebildeten schlitzförmige Durchbrechung zur Befestigung des Greifelementträgers mit seinem dem Drehlager zugekehrten Ende vermittels einer Steckverbindung, wobei die die schlitzförmige Durchbrechung eine der Reifenlauffläche zugekehrte Position für große Reifengrößen einnimmt,
- Fig. 9, 9A und 9B: in schematischen Ansichten ein im dem Trägerelement verdrehbar gehaltenes Drehlager mit einer mittig und mit einer außermittig in dem Drehlager ausgebildeten schlitzförmigen Durchbrechung zur Befestigung des Greifelementträgers mit seinem dem Drehlager zugekehrten Ende vermittels einer Steckverbindung in drei verschiedenen Befestigungspositionen für den Greifelementträger für drei verschiedene Reifengrößen,
- Fig. 10 und 10A: in schematischen Ansichten eine in einer ellipsenförmig ausgebildeten Durchbrechung in dem Trägerelement zur Aufnahme des verdrehbaren Drehlagers angeordnete ellipsenförmige Haltescheibe in einer Grundposition und einer Verschwenkposition für den Greifelementträger,
- Fig. 11: in einer schematischen Ansicht einen Abschnitt eines Trägerelementes mit drei in seiner Ringfläche übereinander liegend angeordneten schlitzförmigen Durchbrechungen zur Aufnahme eines Greifelementträgers der Gleitschutzvorrichtung vermittels einer Steckverbindung,
- Fig. 12: in einer schematischen Ansicht einen Abschnitt eines Trägerelementes mit einem in seiner Ringfläche in radialer Richtung verschieblich gelagerten, in jeder Verschiebestellung arretierbaren Halteschlitten für den Greifelementträger,
- Fig. 13: eine Ansicht von oben auf einen Abschnitt der Reifenlauffläche mit einem auf dieser anliegenden, gabelartig ausgebildeten Greifelement mit schräg zur Radachse verlaufenden Längsseitenkanten und mit auf der Oberfläche des Greifelementes konturerhaben ausgebildeten Profilen,
- Fig. 14: eine Ansicht von oben auf einen Abschnitt der Reifenlauffläche mit einem auf dieser anliegenden Greifelement in einer weiteren Ausführungsform,
- Fig. 15: eine schematische Ansicht eines in einem Trägerelement verdrehbar gehaltenen Drehlagers mit einer mittig in dem Drehlager ausgebildeten schlitzförmigen Durchbrechungen zum Befestigen eines Greifelementes mit seinen dem Drehlager zugekehrten Ende vermittels einer Steckverbindung mit pendelartiger Auslenkmöglichkeit und
- Fig. 16 und 16A: in schematischen Ansichten eine in einer ellipsenförmige ausgebildeten Durchbrechung in dem Trägerelement zur Aufnahme des Drehlagers angeordnete ellipsenförmige Haltescheibe in einer Grundposition und einer Verschwenkposition für einen Greifelementträger einer zu Fig. 10 und 10A alternativen Ausführungsform.

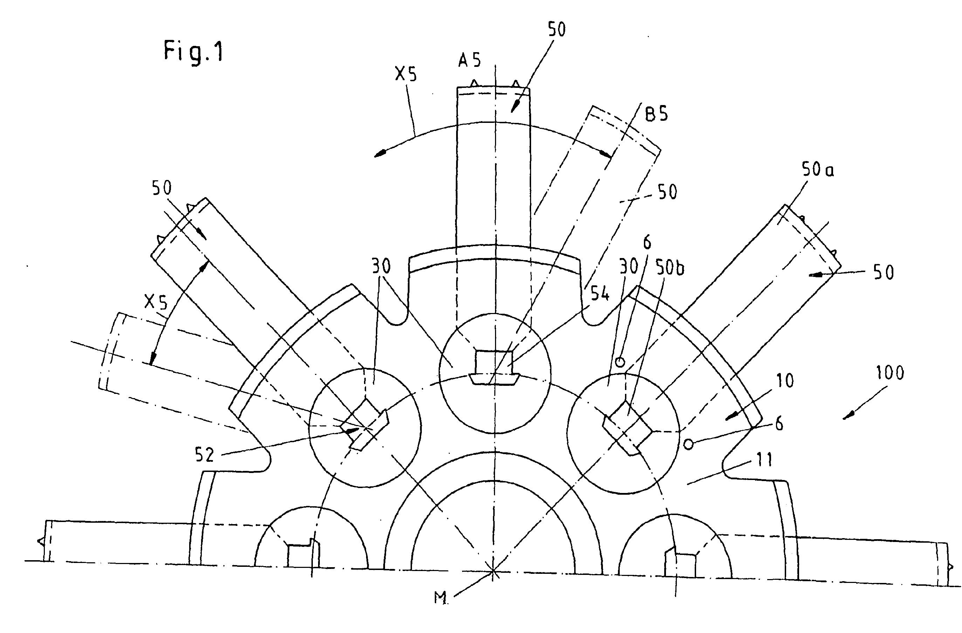

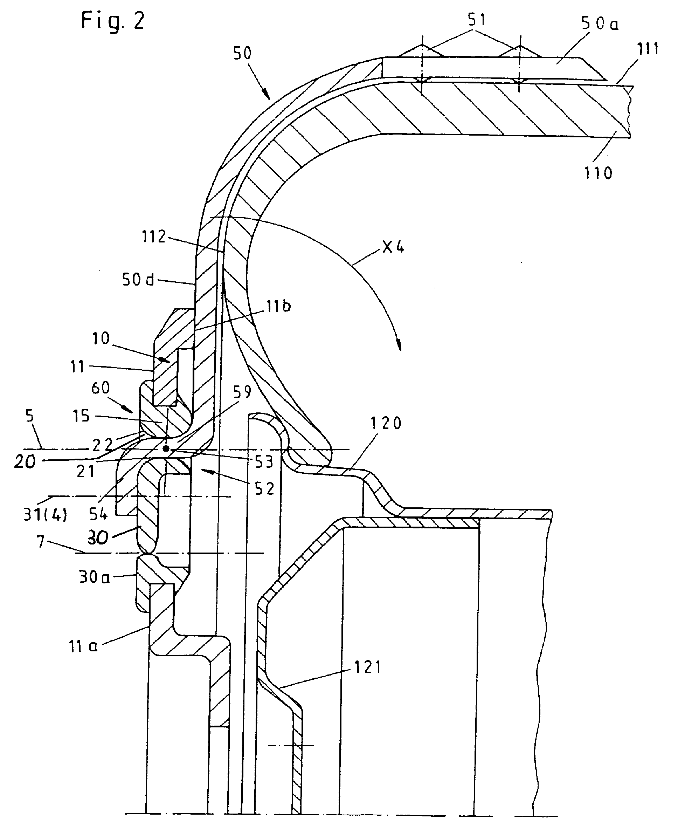

Die in Fig. 1, 2 und 3 dargestellte Gleitschutzvorrichtung 100, insbesondere für luftbereifte Fahrzeugräder auf Eis- und Schneeflächen besteht aus einem Trägerelement 10 als Traghalterung für mindestens einen armartigen Greifelementträger 50 bzw. für eine Anzahl von radial angeordneten Greifelementträgern 50, die an ihren beiden Enden nachstehend näher beschriebene Greifelemente 50a tragen, die fest, lösbar oder scharnierartig an den Greifelementträgern 50 befestigt sein können. Die Befestigung des Trägerelementes 10 erfolgt z. B. mittels Felgenschrauben oder anderen geeigneten Mitteln, z. B. elastischer Elemente o. dgl. an der Felge 120 eines Rades für ein Kraftfahrzeug, dessen Felgenschüssel mit 121 und dessen Reifen mit 110 bezeichnet ist. Die Reifenlauffläche ist bei 111 und die Reifenseitenwandfläche bei 112 in Fig. 2 dargestellt. Das Trägerelement 10 ist bevorzugterweise ringförmig ausgebildet; es kann jedoch auch platten- oder kreisscheibenförmig ausgebildet sein und jede beliebige geometrische Form aufweisen.

Die an dem z. B. als Ringkörper ausgebildeten Trägerelement 10 angeordneten Greifelementträger 50 verlaufen radial und liegen mit einem Abschnitt 50c an der Flanke des Reifens 110 an. Die freien Enden 50a der Greifelementträger 50 sind abgebogen und übergreifen ganz oder teilweise die Reifenlauffläche 111 bzw. liegen auf dieser auf. Die freien Enden der Greifelementträger 50 tragen die Greifelemente 50a mit außenseitig im Bereich der Reifenlauffläche 111 angeordneten Spikes 51 oder in der Zeichnung nicht dargestellte Kettenabschnitte oder in Reifenumfangrichtung auf der Reifenlauffläche 111 verlaufende, durchgehende Kettenstränge von Kettennetzen. Jede Art von Schneeketten kann hier zur Anwendung gelangen und an den Greifelementträgern bzw. zwischen deren Greifelemente angeordnet sein.

Jeder Greifelementträger 50 ist an dem Trägerelement 10 bzw. an dessen Ringkörper außerhalb des Mittelpunktes des Trägerelementes an diesem angeordnet. Ein den jeweiligen Greifelementträger 50 aufnehmendes Drehlager 30 ist ebenfalls außermittig, d. h. exzentrisch zum Mittelpunkt M des Trägerelementes 10 an diesem bzw. an dem Ringkörper angeordnet. Des weiteren ist jeder Greifelementträger 50 u. a. auch vermittels des Drehlagers 30 um eine parallel zur Mittelachse des Trägerelementes 10 und/oder um eine quer zur Mittelachse des Trägerelementes 10 verlaufende Schwenkachse verschwenkbar, so dass im ersten Fall jeder Greifelementträger 50 wechselseitig in Umlaufrichtung der Lauffläche des Reifens verschwenkbar ist und im zweiten Fall jeder Greifelementträger 50 aus der Betriebsstellung an die Innenseite des Trägerelementes 50 klappbar ist, so dass die Gleitschutzvorrichtung auf kleinsten Raum zusammenlegbar ist.

Für eine wechselseitige Schwenkbewegung der Greifelementträger 50 um den Mittelpunkt des Trägerelementes 10 ist an diesem eine der Anzahl der Greifelementträger 50 entsprechende Anzahl von Drehlagern 30 an dem Trägerelement angeordnet bzw. vorgesehen, wobei an jedem Drehlager 30 ein Greifelementträger 50 mit seinem dem Trägerelement zugekehrten Ende gehalten ist. Die Greifelementträger 50 verschwenken zusammen mit den ihnen zugeordneten Drehlagern in Pfeilrichtung X5 (Fig. 1). Ist das Trägerelement 10 ringförmig ausgebildet, sind die Greifelementträger 50 an der Ringfläche schwenkbar gehalten, wobei dann die Drehlager auch in der Ringfläche angeordnet sind.

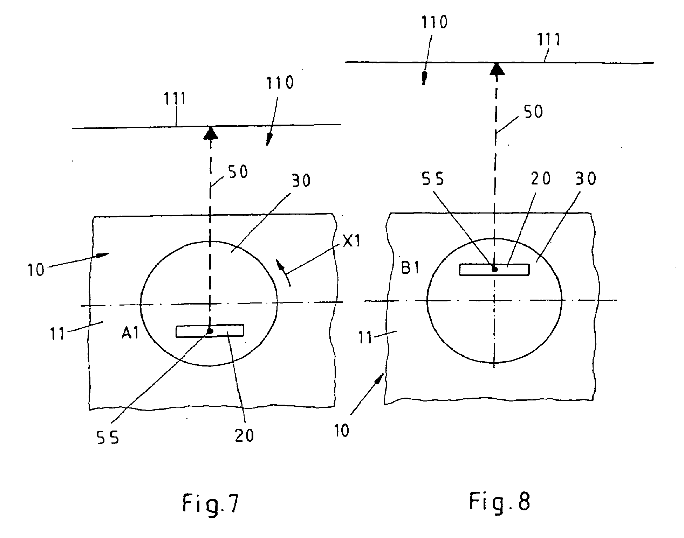

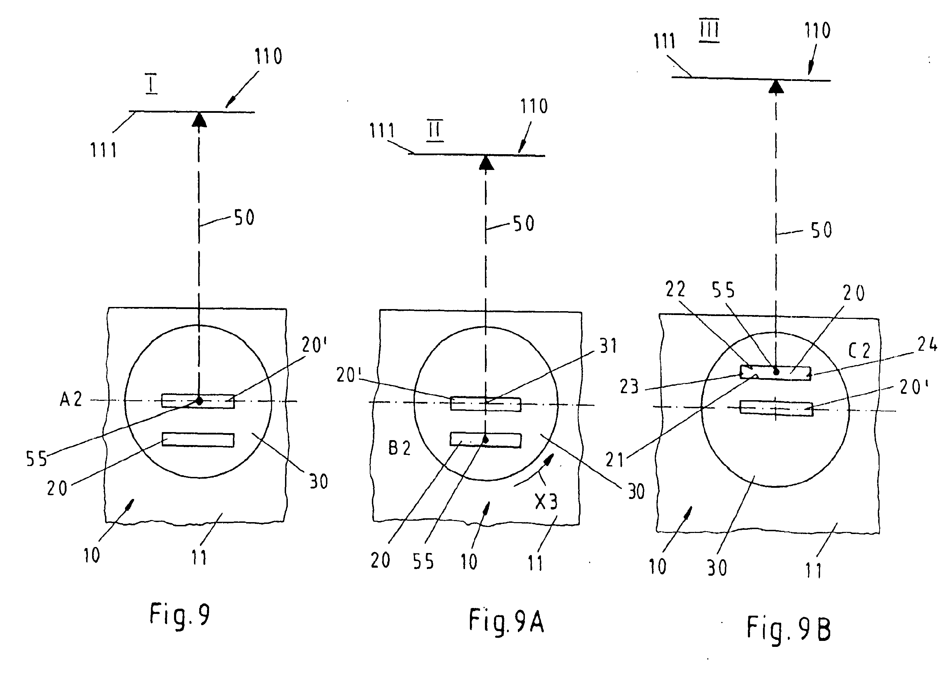

Zur Anpassung der Gleitschutzvorrichtung 100 an unterschiedliche Reifengrößen ist der Abstand der Befestigungspunkte 55 (Fig. 7 und 9) eines jeden Greifelementträgers 50 an der Ringfläche 11 des Ringkörpers des ringförmig ausgebildeten Trägerelementes 10 veränderbar ausgebildet, wobei der Befestigungspunkt 55 für einen jeden Greifelementträger 50 nach erfolgter Einstellung auf die Reifengröße feststellbar ist.

Jedes Drehlager 30 kann mit dem dem Drehlager zugeordneten Greifelementträger 50 eine Baueinheit bilden, so dass das Drehlager 30 und der Greifelementträger einstückig ausgebildet ist. Es besteht jedoch auch die Möglichkeit, jedes Drehlager mit dem diesem zugeordneten Greifelementträger 50 lösbar zu verbinden.

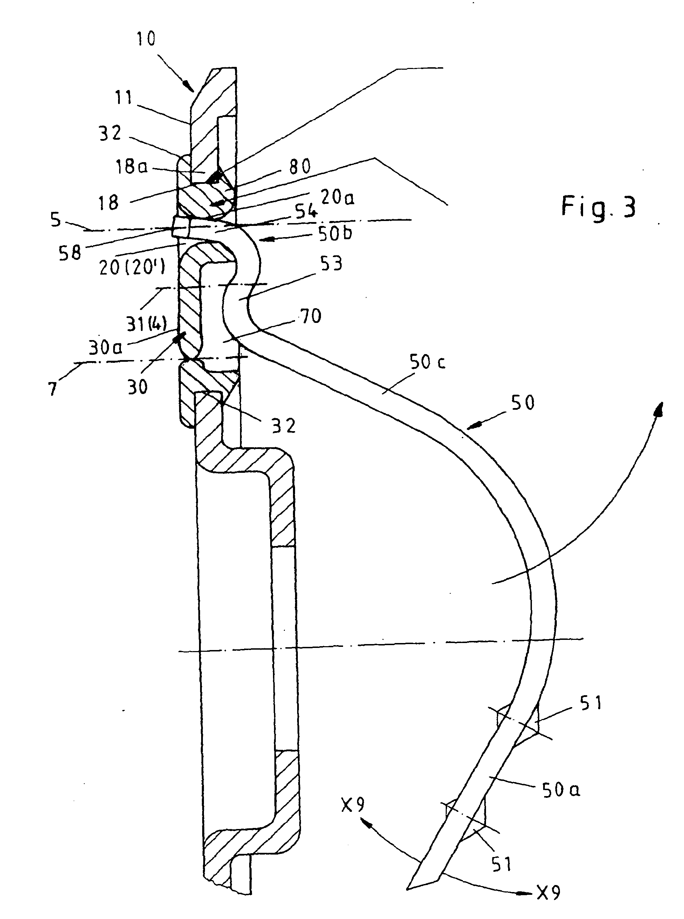

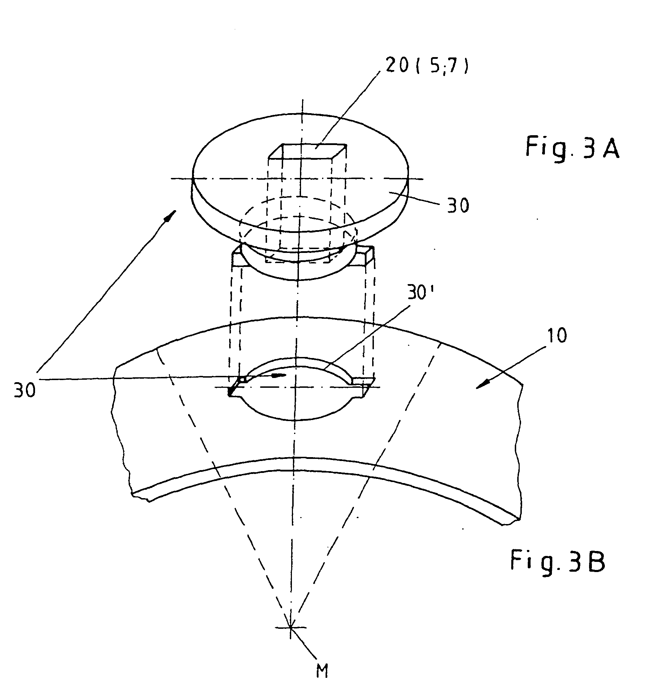

Jedes Drehlager 30 weist mindestens eine zentrische Aufnahme 20 bzw. 4 (Fig. 3) zur Halterung des Greifelementträgers 50 auf. Zur Durchmesserveränderung der Gleitschutzvorrichtung ist jedes Drehlager 30 mit mindestens einer exzentrischen Aufnahme 20 bzw. 5 zur Halterung des Greifelementträgers 50 versehen.

Dabei kann jedes Drehlager 30 beispielsweise mindestens eine exzentrische Aufnahme 20 bzw. 4 und zur Durchmesserveränderung der Gleitschutzvorrichtung mindestens eine weitere exzentrische Aufnahme 5 zur Halterung des Greifelementträgers 50 aufweisen. Für jeden Greifelementträger kann jedes Drehlager 30 mehrere Aufnahmen 20 bzw. 4 bzw. 5 bzw. 7 aufweisen. Auch besteht die Möglichkeit, jedes Drehlager 30 mit einer exzentrischen Aufnahme 20 bzw. 4 und mehreren weiteren exzentrischen Aufnahmen 20 bzw. 5 bzw. 7 zu versehen. Die Anordnung der exzentrischen Aufnahmen kann dabei derart auch sein, dass jedes Drehlager 30 eine exzentrische Aufnahme 20 bzw. 4 und je eine oberhalb und unterhalb dieser exzentrischen Aufnahme liegende weitere exzentrische Aufnahme 20 bzw. 5 bzw. 7 für den Greifelementträger 50 aufweist.

Je nach Ausgestaltung des Drehlagers kann dieses auch mit einer zentrischen Aufnahme und mindestens einer weiteren exzentrischen Aufnahme versehen sein, wobei die exzentrischen Aufnahmen ober- und unterhalb der zentrischen Aufnahme liegen.

Der Dreh- bzw. Verschwenkbereich eines jeden Drehlagers 30 ist seitlich bei 6 begrenzt. Diese Begrenzung kann durch an dem Trägerelement 10 befestigten Nocken oder andere mechanische Einrichtungen vorgenommen werden.

Jedes Drehlager 30 ist bevorzugterweise als scheibenförmige Halterung für den Greifelementträger 50 in einer Ausnehmung in dem Trägerelement 10 drehbar gehalten. Das Drehlager 30 kann jedoch auch mittels Presssitz in der Ausnehmung in dem Trägerelement 10 gehalten sein, jedoch derart, dass die Beweglichkeit des Drehlagers nicht beeinträchtigt wird.

Das Drehlager 30 ist in die dem Drehlager zugeordnete Ausnehmung oder Durchbrechung in dem Trägerelement 10 beispielsweise bajonettartig eingesetzt (Fig. 3A und 3B).

Das Drehlager 30 selbst besteht aus einem Kunststoff oder einem anderen geeigneten Material, wobei auch metallische Werkstoffe zur Herstellung des Drehlagers herangezogen werden können. Auch das Trägerelement 10 kann aus Kunststoff oder einem anderen geeigneten Werkstoff, insbesondere metallischen Werkstoff bestehen.

Die Greifelementträger 50 sind in die Halterung bzw. schlitzförmige Durchbrechungen der Drehlager 30 einsteckbar. Die Lagerung der Greifelementträger 50 an den Drehlagern bzw. an dem Trägerelement ist derart, dass die Greifelementträger sowohl in Pfeilrichtung X9 ein- und ausklappbar sind, d. h. die Greifelementträger 50 sind in die in Fig. 2 dargestellte Stellung herausklappbar und bei Nichtgebrauch in die in Fig. 3 gezeigte Stellung einklappbar, so dass im Nichtgebrauchszustand die Gleitschutzvorrichtung kleinste Abmessungen aufweist und raumsparend untergebracht werden kann. Darüber hinaus ist jeder Greifelementträger 50 vermittels des Drehlagers 30 in Pfeilrichtung X5 (Fig. 1) verschwenkbar bzw. verdrehbar.

Jeder Greifelementträger 50 der Gleitschutzvorrichtung 100 ist über eine nachstehend näher beschriebene Steckverbindung 60 mit dem Trägerelement 10 lösbar verbunden.

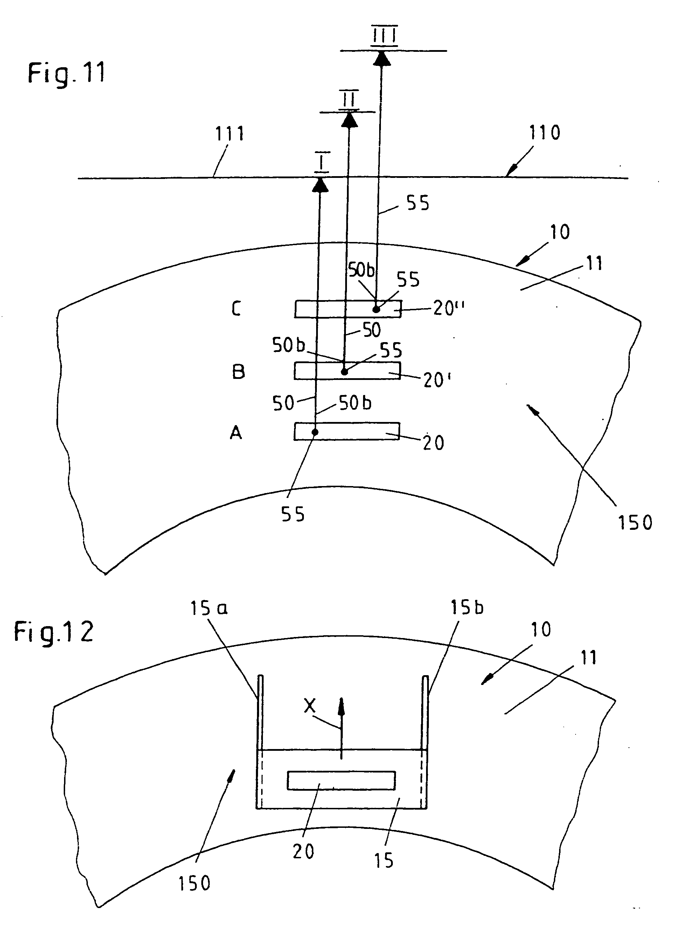

Der Befestigungsbereich 55 eines jeden Greifelementträgers 50 an oder in dem Trägerelement 10 oder in oder an der Ringfläche des ringförmig ausgebildeten Trägerelementes 10 ist in radialer Richtung zu der Reifenlauffläche 11 zur Anpassung der Gleitschutzvorrichtung 100 an verschiedene Reifengrößen vermittels einer Einrichtung 150 lageveränderbar ausgebildet. Diese Einrichtung 150 zur Veränderung der Lage des Befestigungsbereiches 55 für jeden Greifelementträger 50 der Gleitschutzvorrichtung besteht gemäß Fig. 11 aus mindestens zwei in der Ringfläche 11 des Trägerelementes 10 oder in diesem selbst ausgebildeten, parallel zueinander und zu der Reifenlauffläche 111 angeordneten schlitzförmigen Durchbrechungen 20, 20' zum Einführen des Greifelementträgers 50 mit seinem der Reifenlauffläche 111 abgekehrten Ende 50b, so dass zur Lagenveränderbarkeit der Befestigungsbereiche 55 der Greifelementträger 50 an dem Trägerelement 10 jeder Greifelementträger 50 mit seinem Ende 50b in seinem Befestigungsbereich 55 durch Umstecken in die eine schlitzförmige Durchbrechung 20 oder in andere schlitzförmige Durchbrechungen 20' eine reifenlaufflächennahe oder eine reifenlaufflächenferne Position einnimmt. Bei dem in Fig. 11 gezeigten Ausführungsbeispiel sind drei schlitzförmige Durchbrechungen 20, 20', 20" vorgesehen, so dass in den schlitzförmigen Durchbrechungen 20, 20', 20" mittels einer Steckverbindung 60 gehaltene Greifelementträger 50 bei gleichen Greifelementträgerlängen für unterschiedliche Reifengrößen eingesetzt werden können, wobei die unterschiedlichen Reifengrößen bei I, II, III angedeutet sind. Je nachdem in welcher der schlitzförmigen Durchbrechungen der Greifelementträger 50 der Gleitschutzvorrichtung eingesteckt und befestigt wird, sind die entsprechenden Reifengrößen bedienbar, so dass die Gleitschutzvorrichtung nur allein durch das Umstecken der Greifelementträger 50 für verschiedene Reifengrößen verwendbar ist.

Bei der Ausführungsform gemäß Fig. 12 besteht die Einrichtung 150 zur Lagenveränderbarkeit der Befestigungsbereiche 55 der Greifelementträger 50 an dem Trägerelement 10 bzw. dem Ringkörper bei einem ringförmig ausgebildeten Trägerelement 10 in der Ringfläche 11 des Trägerelementes 10 verschiebbaren und feststellbaren Schlitten 15 mit mindestens einer schlitzförmigen Durchbrechung 20 zum Einführen des Greifelementträger 50 mit seinem der Reifenlauffläche 111 abgekehrten Ende 50b. Bei dem Ausführungsbeispiel gemäß Fig. 12 ist der in radialer Pfeilrichtung X verschiebliche Schlitten 15 mit einer schlitzförmigen Durchbrechung 20 versehen, die quer zur Verschieberichtung X liegend verlaufend angeordnet ist. Der Schlitten 15 ist vermittels Führungen 15a, 15b geführt, die in der Ringfläche 11 des Trägerelementes 10 angeordnet oder ausgebildet oder angeformt sind. Durch die Verschiebbarkeit der schlitzförmigen Durchbrechung 20 vermittels des Schlitten 15 ist der Befestigungsbereich 55 eines jeden Greifelementträgers 50 veränderbar, so dass auch mit dieser Ausführungsform die Gleitschutzvorrichtung 100 für verschiedene Reifengrößen einsetzbar ist. Der Befestigungsbereich 55 nimmt je nach der Stellung des Schlittens 15 eine reifenlaufflächennahe oder eine reifenlaufflächenferne Position ein. In jeder Verschiebeposition ist der Schlitten 15 arretierbar mittels Rast- oder Klemmverbindung.

Bei der in Fig. 1, 2 und 3 gezeigten Ausführungsform einer Gleitschutzvorrichtung 100 ist ebenfalls jeder Greifelementträger 50 der Gleitschutzvorrichtung 100 mit dem Trägerelement 10 lösbar verbunden. Jeder Greifelementträger 50 ist dabei in seinem Befestigungsbereich 55 vermittels einer Steckverbindung 60 an einer an oder in der Ringfläche 11 des Ringkörpers des Trägerelementes 10 angeordneten, um eine senkrecht zu der Ringfläche 11 des Ringkörpers stehende Achse 31 an dem Rad oder der Radfelge 120 befestigter Gleitschutzvorrichtung 100 verdrehbaren Drehlager 30 als Lager für den Greifelementträger 50 befestigt. Für die Aufnahme und Halterung des Drehlagers 30 ist in der Ringfläche 11 des Ringkörpers für jeden Greifelementträger 50 eine Durchbrechung 18 ausgebildet, in der das Drehlager 30 gehalten, geführt und gelagert ist. Dieses Drehlager 30 weist außermittig mindestens eine schlitzförmige Durchbrechung 20 zum Einführen und Befestigen des Greifelementträger 50 mit seinem der Reifenlauffläche 111 abgekehrten Ende 50b mittels der Steckverbindung 60 auf, so dass der Befestigungsbereich 55 eines jeden Greifelementträgers 50 an dem verdrehbaren Drehlager 30 in radialer Richtung zu der Reifenlauffläche 111 zur Anpassung der Gleitschutzvorrichtung 100 an verschiedene Reifengrößen durch Verdrehen des Drehlagers 30 die schlitzförmige Durchbrechung 20 lageveränderbar ist und somit eine reifenlaufflächennahe oder eine reifenlaufflächenferne Position einnimmt. Die Anzahl der Drehlager 30 in der Ringfläche 11 des Stützringes entspricht der Anzahl der Greifelementträger 50, die die Gleitschutzvorrichtung 100 aufweist. Bevorzugterweise weist jedes Drehlager 30 eine in dieser außermittig angeordnete schlitzförmige Durchbrechung 20 auf.

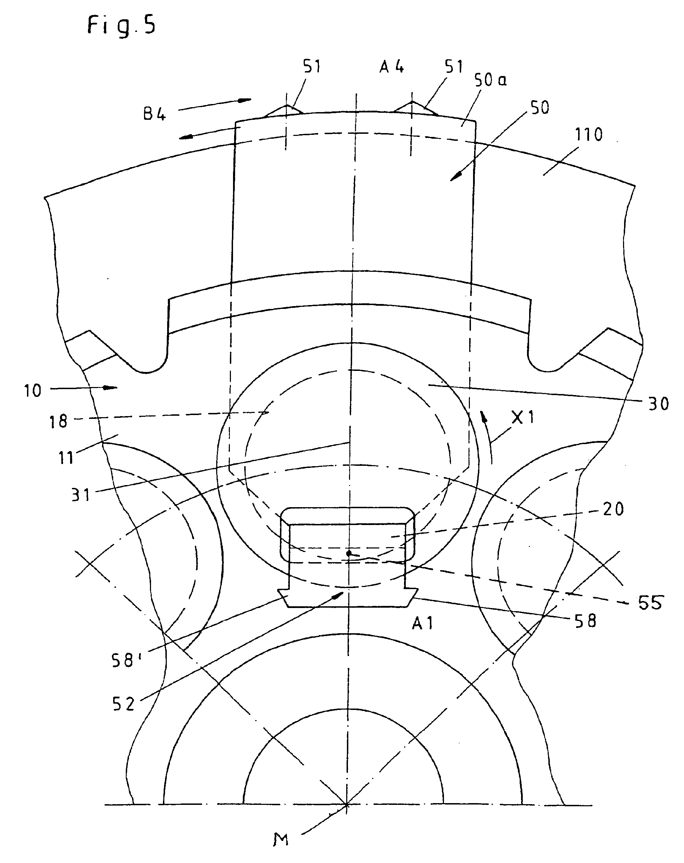

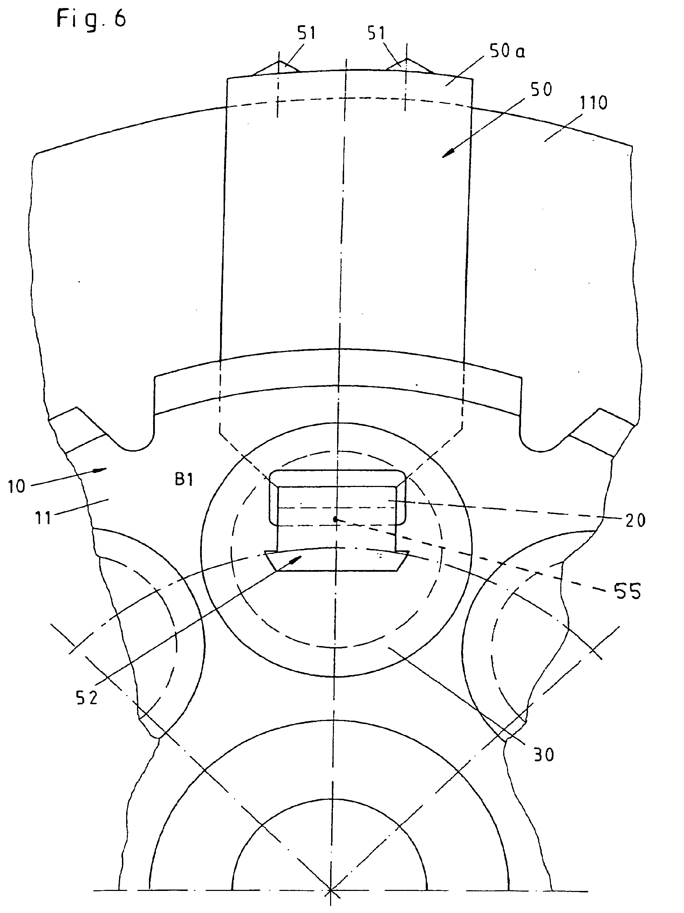

Fig. 5 zeigt eine Stellung der schlitzförmigen Durchbrechung 20 in dem Drehlager 30, in der die schlitzförmige Durchbrechung eine reifenlaufflächenferne Position einnimmt, d. h. die schlitzförmige Durchbrechung 20 und somit der Befestigungsbereich 55 für den Greifelementträger 50 befindet sich in einer zur Reifenlauffläche 111 abgekehrten Position. In dieser Stellung des Drehlagers 30 mit seiner schlitzförmigen Durchbrechung 20 ist die Gleitschutzvorrichtung für kleine Reifengrößen verwendbar, wohingegen bei der Position der schlitzförmigen Durchbrechung 20 in dem Drehlager 30 gemäß Fig. 6 der Befestigungsbereich 55 für den Greifelementträger 50 eine reifenlaufflächennahe Position einnimmt, nachdem das Drehlager 30 in Pfeilrichtung X1 von der Position A1 (Fig. 5) in die Position B1 (Fig. 6) überführt worden ist. In der in Fig. 6 gezeigten Stellung der schlitzförmigen Durchbrechung 20 in dem Drehlager 30 nimmt der Greifelementträger 50 eine Position ein, aufgrund der die Gleitschutzvorrichtung 100 für eine größere Reifengröße einsetzbar ist. Die Anpassung der Gleitschutzvorrichtung an verschiedene Reifengrößen wird hiernach mit der gleichen Länge der Greifelementträger 50 erreicht.

Die Fig. 7 und 8 zeigen schematisch die Stellungen der Drehlager 30 gemäß der Fig. 5 und 6, wobei nach Fig. 7 der Befestigungspunkt 55 des Greifelementträgers 50 in der schlitzförmigen Durchbrechung 20 eine reifenlaufflächenferne Position einnimmt, so dass in dieser Stellung der Greifelementträger 50 die Gleitschutzvorrichtung für kleine Reifengrößen einsetzbar ist. Soll die Gleitschutzvorrichtung 100 bei größeren Reifengrößen eingesetzt werden, dann ist das Drehlager 30 in Pfeilrichtung X1 soweit zu verdrehen, bis die schlitzförmige Durchbrechung 20 die in Fig. 8 gezeigte Stellung B1 einnimmt. Mit gleicher Länge der Greifelementträger 50 wird somit die Möglichkeit geschaffen, die Gleitschutzvorrichtung 100 auch für größere Reifengrößen zu verwenden, ohne dass Greifelementträger 50 mit unterschiedlichen Längen eingesetzt werden müssen.

Die Drehlager 30 mit ihren schlitzförmigen Durchbrechungen 20 für die Anordnung der Greifelementträger 50 mittels Steckverbindungen 60 können nach einer weiteren Ausführungsform gemäß Fig. 9, 9A, 9B außermittig eine erste schlitzförmige Durchbrechung 20 und mittig eine parallel zu der außermittig angeordneten Durchbrechung 20 verlaufende zweite schlitzförmige Durchbrechung 20' zum Einführen des Greifelementträgers 50 mit seinem der Reifenlauffläche 111 abgekehrten Ende 50b versehen sein. Dadurch, dass bei dieser Ausführungsform das Drehlager 30 für jeden Greifelementträger 50 mit zwei unterschiedlich positionierten schlitzförmigen Durchbrechungen 20, 20' versehen ist, ist die Möglichkeit gegeben, mit einer derartig ausgebildeten Gleitschutzvorrichtung drei verschiedene Reifengrößen zu bedienen. Bei einer Befestigung des Greifelementträgers 50 in der schlitzförmigen Durchbrechung 20' des Drehlagers 30 nimmt der Befestigungspunkt 55 des Greifelementträgers 50 die in Fig. 9 gezeigte Position A2 ein. Wird der Greifelementträger 50 umgesteckt und in der schlitzförmigen Durchbrechung 20 befestigt, dann nimmt der Befestigungspunkt 55 des Greifelementträgers 50 die in Fig. 9A gezeigte Stellung B2 ein. In dieser Stellung des Drehlagers 30 nimmt die schlitzförmige Durchbrechung 20 eine reifenlaufflächenferne Position ein. Wird das Drehlager 30 in Pfeilrichtung X3 um ihren Mittelpunkt 31 derart verschwenkt, dass ihre schlitzförmige Durchbrechung 20 eine reifenlaufflächennahe Position einnimmt, wie in Fig. 9B gezeigt, dann nimmt der Befestigungspunkt 55 des Greifelementträgers in der schlitzförmigen Durchbrechung 20 die Position C2 ein. Auf diese Weise ist die Möglichkeit gegeben drei verschiedene Reifengrößen I, II, III zu bedienen.

Das freie in der schlitzförmigen Durchbrechung 20, 20' in dem Schlitten 15 oder in der Ringfläche 11 des Trägerelementes 10 oder in dem Drehlager 30 gehaltene Ende 50b eines jeden Greifelementträgers 50 der Gleitschutzvorrichtung weist eine Z-förmige Profilausgestaltung 52 auf, die in Verbindung mit der schlitzförmigen Durchbrechung 20, 20', 20" die Steckverbindung 60 zum Befestigen eines jeden Greifelementträgers 50 an dem Trägerelement 10 bildet. Diese Z-förmige Profilausgestaltung 52 des Endes 50b eines jeden Greifelementträgers 50 besteht aus einem in einem rechten Winkel zu dem geradlinig verlaufenden Abschnitt 50c des Greifelementträgers 50 abgebogenen ersten Endabschnitt und aus einem in einem rechten Winkel zu dem ersten Endabschnitt 53 abgebogenen und parallel zu dem geradlinig verlaufenden Abschnitt 50c des Greifelementträgers 50 verlaufenden zweiten Endabschnitt 54 (Fig. 2). Die Befestigung eines jeden Greifelementträgers 50 erfolgt in der Weise, dass durch die schlitzförmige Durchbrechung 20, 20' der Greifelementträger 50 mit seinem freien Ende 50b eingesteckt wird, so dass der abgewinkelte Endabschnitt 54 der Z-förmigen Profilausgestaltung 52 des Endes 50b des Greifelementträgers auf der Außenwandfläche 11a der Ringfläche 11 des Ringkörpers des Trägerelementes 10 oder auf der Außenwandfläche 30a des Drehlagers 30 abstützt, wobei sich der Greifelementträger 50 im Übergangsbereich seines geradlinig verlaufenden Abschnittes 50c des Greifelementträgers mit dem abgewinkelten Endabschnitt 53 der Z-förmigen Profilausgestaltung 52 des Endes 50b des Greifelementträgers 50 an der dem Rad zugekehrten Wandfläche 11b des Trägerelementes 10 bevorzugter Weise vermittels einer wulstartigen Abstützfläche, die an der die schlitzförmige Durchbrechung 20 begrenzenden Wand 20a vorgesehen ist. Diese wulstartige Abstützfläche 80 bildet gleichzeitig die die schlitzförmige Durchbrechung 20, 20' begrenzende Längskante 22 (Fig. 2).

Durch die Verwendung der Steckverbindung 60 aus der Z-förmigen Profilausgestaltung 52 des Endes 50b eines jeden Greifelementträgers 50 und durch die schlitzförmige Durchbrechung 20, 20' ist jeder Greifelementträger 50 nicht nur lösbar mit dem Trägerelement 10 verbunden, sondern darüber hinaus auch noch in der schlitzförmigen Durchbrechung 20, 20' um eine Achse 59 verschwenkbar, die parallel zum Trägerelement 10 verlaufend ist (Fig. 2). Dadurch ist die Möglichkeit gegeben, jeden Greifelementträger 50 der Gleitschutzvorrichtung 100 bei Nichtgebrauch der Gleitschutzvorrichtung in Pfeilrichtung X4 zu verschwenken und an die Innenseite des Trägerelementes 10 einzuklappen (Fig. 3).

Um die Greifelementträger 50 der Gleitschutzvorrichtung 100 soweit wie möglich an das Trägerelement 10 heranklappen zu können, ohne dass dabei die Greifelementträger aus den schlitzförmigen Durchbrechungen 20, 20' herausgezogen werden, ist die Länge des Endabschnittes 53 der Z-förmigen Profilausgestaltung 52 an dem Ende 50b eines jeden Greifelementträgers derart lang bemessen, dass bei einem Einklappen des Greifelementträgers an die Innenseite des Trägerelementes 10 das freie Ende 10b des Greifelementträgers 50 auf der Außenwandfläche 30a des Drehlagers 30 soweit gleitet, bis das freie Ende 50b des Greifelementträgers 50 vermittels seitlicher am Ende des Greifelementträgers angeformter Rastnocken 58, 58' an den Schmalseiten 23, 24 der den Greifelementträger 50 aufnehmenden schlitzförmigen Durchbrechung 20, 20' zur Anlage gebracht ist. Jede schlitzförmige Durchbrechung 20, 20' ist begrenzt durch Längsseiten 21, 22 und Schmalseiten 23, 24 (Fig. 9B).

In Betriebszustand der Gleitschutzvorrichtung 100 nimmt dann jeder Greifelementträger 50 die in Fig. 2 gezeigte Stellung ein. Das freie Ende 50b des Greifelementträgers mit seiner Z-förmigen Profilausgestaltung 52 ist dann durch die schlitzförmige Durchbrechung 20 so hindurchgesteckt, dass der freie Endabschnitt 54 des Greifelementträgers 50 auf der Außenwandfläche 30a des Drehlagers 30 zu liegen kommt und sich auf diesem abstützt und dabei mit seiner ganzen Abschnittslänge auf dem Drehlager 30 aufliegt (Fig. 2). Beim Einklappen der Greifelementträger 50 wird das freie Ende 50b eines jeden Greifelementträgers 50 aus der schlitzförmigen Durchbrechung 20 soweit herausgeführt, bis die seitlichen Rastnocken 58, 58' an dem Ende 50b des Greifelementträgers 50 sich an den Seitenkanten 23, 24 der schlitzförmigen Durchbrechung 20 abstützen.

Zur Unterstützung des Verschwenkens eines jeden Greifelementträgers 50 in die eingeklappte Stellung (Fig. 3), weisen die eine jede schlitzförmige Durchbrechung 20, 20' in der Ringfläche 11 des Trägerelementes 10 oder in dem Schlitten 15 oder in verdrehbaren Haltescheibe für den Greifelementträger 50 begrenzenden Längsseitenkanten 21, 22 eine bogenförmige Wandausgestaltung als Schwenkhilfe für das Heranklappen eines jeden Greifelementträgers 50 an den Stützring bzw. an das Trägerelement 10 um eine senkrecht zu der Mittelachse 31 des Drehlagers 30 stehende Schwenkachse 59 auf.

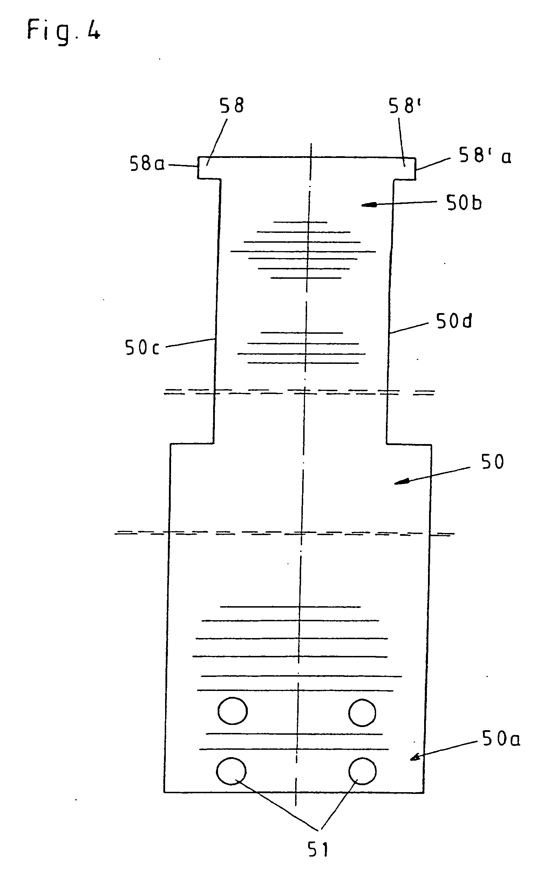

Die an dem freien Ende 50b eines jeden Greifelementträgers 50 der Gleitschutzvorrichtung 100 angeordneten bzw. angeformten Rastnocken 58, 58' erstrecken sich zu beiden Seiten der Längsseitenkanten 50d, 50e des Greifelementträgers 50, wobei die Länge von der äußeren Kante 58a des einen Rastnockens 58 zu der äußeren Kante 58'a des anderen Rastnokkens 58 etwas größer bemessen ist, als die Länge der schlitzförmigen Durchbrechung 20, 20' in dem Schlitten 15, der Ringfläche 11 des Ringkörpers des Trägerelementes 10 oder des Drehlagers 30 (Fig. 4).

Das Drehlager 30 an der dem Rad oder der Felge zugekehrten Wandfläche ist mit einer Einziehung 70 zur Aufnahme der abgebogenen Abschnitte 53, 54 des Endes 50b eines jeden Greifelementträgers 50 in eingeklappter Position der Greifelemente 50 der Gleitschutzvorrichtung versehen.

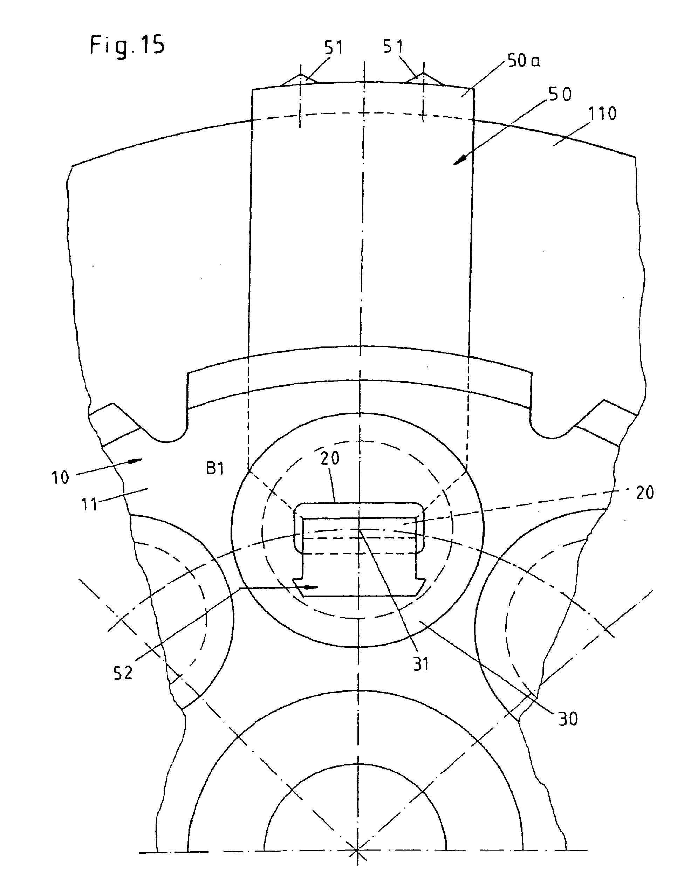

Jedes Drehlager 30 mit der schlitzförmigen Durchbrechung 20 bzw. den schlitzförmigen Durchbrechungen 20, 20' zur Halterung und Aufnahme des Greifelementträgers 50 mit seinem Ende 50b ist bevorzugter Weise kreisförmig ausgebildet und in einer in der Ringfläche 11 des Ringkörpers des Trägerelementes 10 ausgebildeten, ebenfalls bevorzugter Weise kreisförmigen Durchbrechung 18 mittels Klemmsitz drehbar gehalten und lagegesichert (Fig. 5 bzw. 15). Die umlaufende Wandfläche 32 eines jeden Drehlagers 30 für den Greifelementträger 50 ist als Ringnut 32 ausgebildet, in die die umlaufende Wand 18a der das Drehlager 30 aufnehmende kreisförmige Durchbrechung 18 eingreift (Fig. 3).

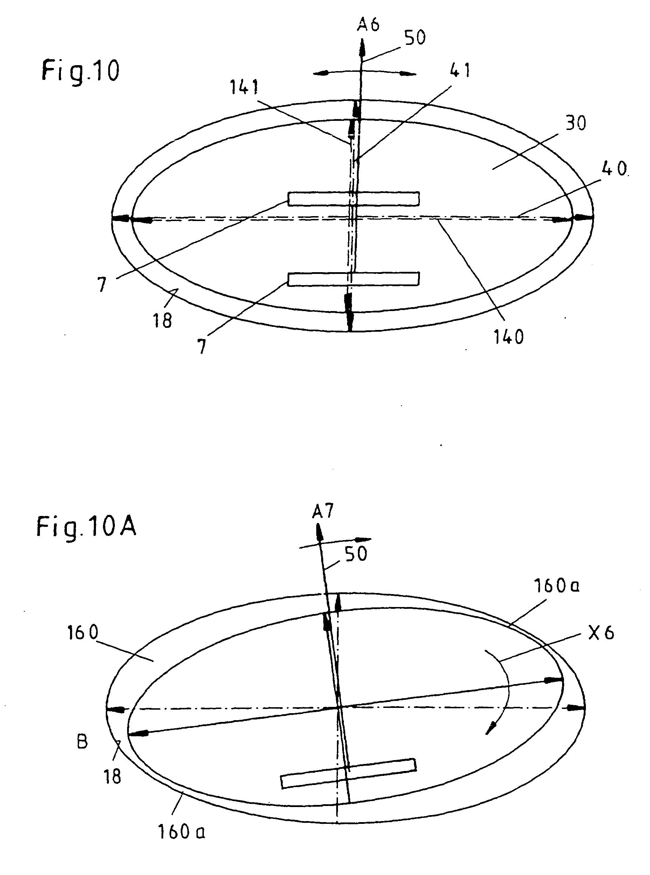

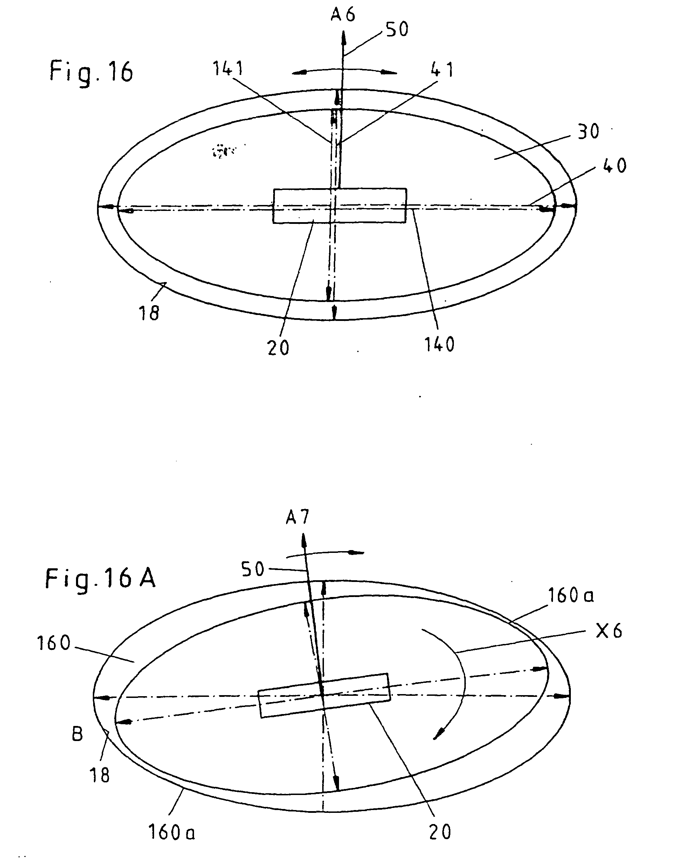

Jedes Drehlager 30 mit in dessen schlitzförmigen Durchbrechung 20, 20' vermittels der Steckverbindung 60 gehaltenem Greifelementträgers 50 ist bei einem Verschwenken des Greifelementträgers 50 aus seiner radialen Reifenanlageposition A4 um die senkrecht zu dem Drehlager 30 stehende Mittelachse 31 des Drehlagers 30 in eine seitliche Position B4 in die Position A4 zurückschwenkbar, in der der Greifelementträger 50 seine radiale Anlageposition an dem Reifen einnimmt (Fig. 5 bzw. 15). Alle Greifelementträger 50 der Gleitschutzvorrichtung 100 sind um ihre Befestigungspunkte 50b in den Drehlagern 30 in Pfeilrichtung X5 verschwenkbar (Fig. 1). Das Zurückverschwenken eines jeden Greifelementes 50 von der Position B5 in die Position A5 wird unterstützt beispielsweise mittels Federkräfte, die auf das Drehlager 30 einwirken und die ein Zurückverdrehen des Drehlagers 30 in ihre Ausgangsposition von einer verdrehten Position aus unterstützen. Eine weitere Möglichkeit für das Zurückverschwenken eines jeden Drehlagers 30 mit seinem Greifelementträger 50 um eine senkrecht zu dem Ringkörper des Trägerelementes 10 stehende Mittelachse 31 des Drehlagers 30 in eine radiale Reifenanlageposition A5 für den Greifelementträger 50 aus einer zu der Mittelachse 31 des Drehlagers 30 verschwenkten Position B5 ist beispielsweise gemäß Fig. 10 und 10A oder Fig. 16 und 16A die das Drehlager 30 aufnehmende Durchbrechung 18 in der Ringfläche 11 des Ringkörpers des Trägerelementes 10 oval bzw. ellipsenartig ausgebildet. Auch das in der Durchbrechung 18 gehaltene Drehlager 30 für den Greifelementträger 50 weist ebenfalls eine ovale bzw. ellipsenartige Form auf, wobei die Größe des ovalen bzw. ellipsenartigen Drehlagers 30 gegenüber der ovalen bzw. ellipsenartigen Durchbrechung 18 derart bemessen ist, dass die Länge der Hauptachse 140 des Drehlagers 30 gegenüber der Länge der Hauptachse 40 der Durchbrechung 18 in der Ringfläche 11 des Ringkörpers des Trägerelementes 10 kleiner ist. Die Länge der Nebenachse 141 des Drehlagers 30 ist kleiner oder entspricht mindestens der Länge der Nebenachse 41 der Durchbrechung 18 in der Ringfläche 11 des Trägerelement (Fig. 10, 16). Aufgrund dieser Ausgestaltung des Drehlagers 30 zu der das Drehlager aufnehmenden Durchbrechung 18 ist zwischen dem umlaufenden Rand des Drehlagers 30 und dem umlaufenden Rand der Durchbrechung 18 ein Zwischenraum, der mittels eines federnd-elastischen Materials, insbesondere Kunststoff ausgefüllt sein kann. Wird der Greifelementträger 50 in die in Fig. 10A, 16A gezeigte Position verschwenkt, dann begrenzt das Verhältnis der Formgebung des Drehlagers 30 zu der der Durchbrechung 18 die Schwenkbewegung, in dem nämlich die ellipsenförmige Haltescheibe in ihrer Verdrehbewegung durch Anlage an der Innenwandfläche der Durchbrechung 18 begrenzt wird (Fig. 10A, 16A). Unter Zuhilfenahme der in den Zwischenraum 160 zwischen dem Drehlager 30 und der umlaufenden Wand der Durchbrechung 18 angeordneten federnd-elastischen Materials erfolgt ein Zurückstellen bzw. Zurückverdrehen des Drehlagers 30 mit seinem Greifelementträger 50 von der Position A7 in die Position A6 (Fig. 10, 16). Dadurch, dass das federnd-elastische Material in de Zwischenraum 160 in den Bereichen 160a zusammengepresst ist und das Bestreben hat, aufgrund seines Rückstellvermögens in seine Ausgangsposition zurückzufedern, wird das Drehlager 30 in Pfeilrichtung X6 in seine Ausgangsposition zurückbewegt, in der der Greifelementträger 50 eine radiale Stellung zur Reifenlauffläche einnimmt. Die Teile wie Trägerelement 10, Greifelementträger 50, Schlitten 15 und Drehlager 30, der Gleitschutzvorrichtung 100 bestehen bevorzugterweise aus Kunststoffen. Die Gleitschutzvorrichtung 100 weist mindestens einen bevorzugterweise drei Greifelementträger 50 auf. Für Personenkraftfahrzeuge ist eine maximale Anzahl von 12 vorgesehen, wohingegen die Anzahl der Greifelementträger 50 der Gleitschutzvorrichtung für Lastkraftwagen mehr als 12 betragen kann.

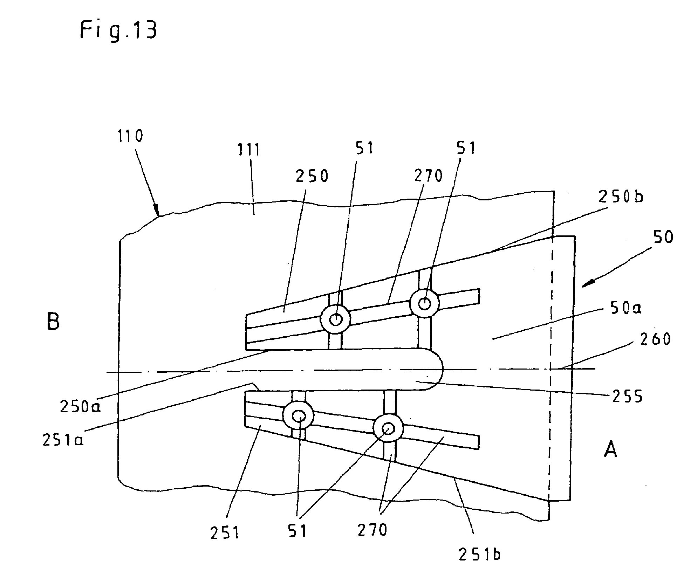

Nach Fig. 13 ist das Greifelement 50a am Ende des Greifelementträgers 50, das auf der Lauffläche 111 des Reifens 110 anliegt, gabelartig, d. h. V-förmig ausgebildet, und weist zwei Schenkel 250, 251 auf, deren einander zugekehrten Längskanten250a, 251a, parallel unter Ausbildung eines etwa U-förmigen Zwischenraumes 255 zueinander verlaufen, während die äußeren Längsseitenkanten 250b, 251b schräg verlaufend zur Radachse 260 sind. Bei der Ausführungsform gemäß Fig. 13 verlaufen die äußeren Längsseitenkanten 250b, 251b in Richtung A nach außen hin sich erweiternd, wobei die Längsseitenkanten 250b, 251b auch in Richtung B nach innen sich erweiternd verlaufen können.

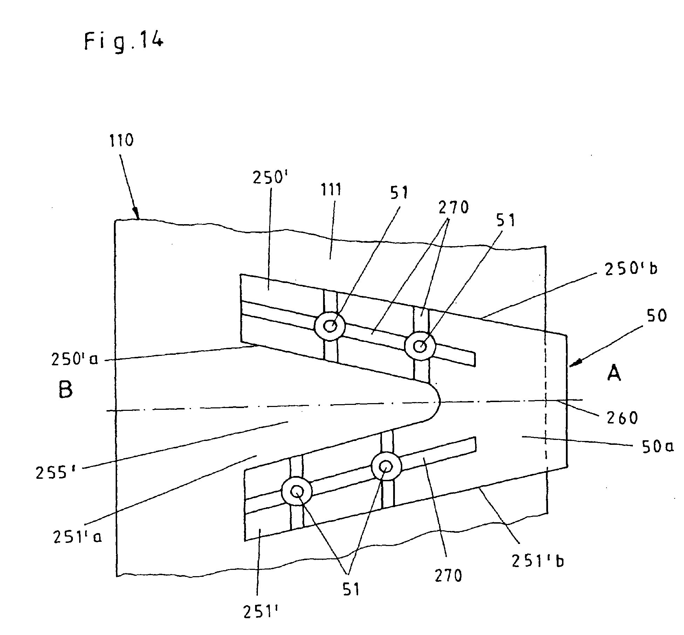

Bei der Ausführungsform nach Fig. 14 ist das auf der Reifenlauffläche 111 aufliegende Greifelement 50a am Ende des Greifelementträgers 50 ebenfalls gabelartig, d. h. V-förmig ausgebildet. Die beiden Schenkel 250', 251' des Greifelementes 50a sind dabei derart gespreizt, dass sie sich zur Innenseite des Rades in Richtung B hin erweitern, so dass ein etwa V-förmiger Zwischenraum 255' erhalten wird, wobei die äußeren Längsseitenkanten 250'b, 251'b und die einander zugekehrten inneren Längskanten 250'a, 251'a in etwa parallel zueinander verlaufen. Auch bei dieser Ausführungsform verlaufen die äußeren Längsseitenkanten 250'b, 251'b nicht parallel zu der Radachse 260. Mit dieser Ausgestaltung des Greifelementes 50a gemäß Fig. 13 und 14 wird eine Leistungserhöhung und ein sanfteres Abrollen erreicht.

Wie Fig. 13 und 14 ferner zeigen, sind die Oberflächen der Schenkel 250, 251, und 250', 251' des auf der Reifenlauffläche 111 aufliegenden Greifelementes 50a mit konturerhabenen Profilierungen 270 in Form von sich kreuzenden Profilstegen, wobei in den jeweiligen Kreuzungspunkten der Profilstege Spikes 51 angeformt sind. Durch diese Anordnung der Spikes 51 in den Kreuzungspunkten der Profilstege der Profilierungen 270 sind die Spikes 51 sicher an de Greifelementen 50a gehalten und gegen ein Herausreißen aus dem Material der Greifelementträger gesichert.

Fig. 15 zeigt eine zu Fig. 5 analoge Darstellung einer alternativen Ausführungsform, bei der das Drehlager 30 lediglich einen einzigen Schlitz 20 symmetrisch zur Drehachse 31 aufweist. Mit anderen Worten ist der Schlitz 20 im Zentrum des Drehlagers 30 ausgebildet. Hierdurch ist eine Verschwenkbarkeit des Greifelementträgers 50, wie in Fig. 1 mit A5 und B5 angedeutet, gewährleistet. Zur Anpassung an verschiedene Reifengrößen wird bei dieser Ausführungsform einfach der Greifelementträger 50 aus der lösbaren Halterung im Schlitz 20 entfernt und ein anderer Greifelementträger 50 mit passender Länge eingesteckt. Das Drehlager 30 bildet ein in das Trägerelement 10 bzw. in den Stützring eingedrücktes Lager, welches allen nötigen Drehbewegungen, Druckbelastungen und Verwindungsbelastungen standhält. Auch die Steckverbindung zwischen dem Greifelementträger 50 und dem Lager 20, 30 hält diesen Belastungen stand. Somit steht eine besonders vorteilhafte Steck- und Drehverbindung für die Greifelementträger 50 zur Verfügung, wobei das einfache Einstecken der Greifelementträger 50 und das Austauschen derselben durch die manuell einfachen Arbeitsschritte durch den Endverbraucher selbst durchgeführt werden kann. Beispielsweise ist der Greifelementträger 50 und das Lager 20, 30 als kombiniertes Spritzteil ausgeführt. Zur weiteren Erläuterung der Fig. 15 wird auf die obigen Ausführungen zur Fig. 5 verwiesen.

Fig. 16 und 16A zeigen eine zu Fig. 10 und 10A analoge Darstellung, wobei wiederum, wie bei den Ausführungsformen gemäß Fig. 5 und 15, eine alternative Ausführungsform mit symmetrischen um Zentrum des Drehlagers 30 ausgebildeten Schlitz 20 vorgesehen ist. Ansonsten wird zur weiteren Erläuterung der Fig. 16 und 16A auf die obigen Ausführungsformen der Fig. 10 und 10A verwiesen.

## Patentansprüche

1. Gleitschutzvorrichtung, insbesondere für luftbereifte Fahrzeugräder, für Eis- und Schneeflächen, die einseitig an dem Fahrzeugrad gehalten ist und die eine Anzahl von an einem Trägerelement (10) angeordneten, die Reifenlauffläche (111) teilweise übergreifenden, armartigen Greifelementträgern (50) mit an ihren freien Enden vorgesehenen Greifelementen (50a) aufweist, wobei für eine wechselseitige Schwenkbewegung der Greifelementträger (50) mit ihren Greifelementen (50a) um einen innerhalb oder außerhalb des Mittelpunktes des Trägerelementes (10) liegenden Mittelpunkt an dem Trägerelement (10) eine der Anzahl der Greifelementträger (50) entsprechende Anzahl von Drehlagern (30) angeordnet ist, wobei jedes Drehlager (30) eine oder mehrere außerhalb des Mittelpunktes des Trägerelementes (10) liegende Aufnahme (20; 4) aufweist zur Halterung des Greifelementträgers, so dass je nach Lage der Aufnahme (20; 4) die Gleitschutzvorrichtung an unterschiedliche Reifengrößen anpassbar ist,
**dadurch gekennzeichnet,**
**dass** jeder Greifelementträger (50) der Gleitschutzvorrichtung (100) mit dem Trägerelement (10) oder dem Ringkörper des ringförmig ausgebildeten Trägerelementes (10) lösbar verbunden ist, wobei jeder Greifelementträger (50) in seinem Befestigungsbereich (55) vermittels einer Steckverbindung (60) an einer an oder in der Trägerelementfläche oder in der Ringfläche (11) des ringförmig ausgebildeten Trägerelementes (10) angeordneten, um eine senkrecht zu der Trägerelementfläche oder zu der Ringfläche (11) des Trägerelementes (10) stehende Achse (31) bei an dem Rad oder der Radfelge (120) befestigter Gleitschutzvorrichtung (100) vorgesehenen Drehlager (30) als Lager für die Greifelementträger (50) befestigt ist, das außermittig mindestens eine schlitzförmige Durchbrechung (20) zum Einführen und Befestigen des Greifelementträgers (50) mit seinem der Reifenlauffläche (111) abgekehrten Ende (50b) mittels der Steckverbindung (60) aufweist, so dass der Befestigungsbereich (55) eines jeden Greifelementträgers (50) an dem Drehlager (30) in radialer Richtung zu der Reifenlauffläche (111) zur Anpassung der Gleitschutzvorrichtung (100) an verschiedene Reifengrößen durch Verdrehen eines jeden Drehlagers (30) die schlitzförmige Durchbrechung (20) lageveränderbar ausgebildet ist und eine reifenlaufflächennahe oder eine reifenlaufflächenferne Position einnimmt.

2. Gleitschutzvorrichtung nach Anspruch 1,
**dadurch gekennzeichnet,**
**dass** jeder Greifelementträger (50) der Gleitschutzvorrichtung (100) lösbar mit dem Trägerelement (10) verbunden ist, wobei jeder Greifelementträger (50) in seinem Befestigungsbereich (55) vermittels einer Steckverbindung (60) an oder in der Trägerelementfläche oder an oder in der Ringfläche des ringförmig ausgebildeten Trägerelementes (10) angeordneten, um eine senkrecht zu der Trägerelementfläche oder Ringfläche (11) des ringförmig ausgebildeten Trägerelementes (10) stehende Achse (31) bei an dem Rad oder der Radfelge (120) befestigter Gleitschutzvorrichtung (100) vorgesehenen Drehlager (30) befestigt ist, das außermittig mindestens eine erste schlitzförmige Durchbrechung (20) und mittig eine parallel zu der außermittig angeordneten Durchbrechung (20) verlaufende zweite schlitzförmige Durchbrechung (20') zum Einführen des Greifelementträgers (50) mit seinem der Reifenlauffläche (111) abgekehrten Ende (50b) aufweist, so dass der Befestigungsbereich (55) eines jeden Greifelementträgers (50) in der ersten schlitzförmigen Durchbrechung (20) des Drehlagers (30) in radialer Richtung zu der Reifenlauffläche (111) zur Anpassung der Gleitschutzvorrichtung (100) an verschiedene Reifengrößen durch Verdrehen eines jeden Drehlagers (30) in dem Trägerelement (10) die erste schlitzförmige Durchbrechung (20) lageveränderbar ausgebildet ist und eine reifenlaufflächennahe oder eine reifenlaufflächenferne Position einnimmt.

3. Gleitschutzvorrichtung nach einem der Ansprüche 1 oder 2,
**dadurch gekennzeichnet,**
**dass** das freie, in der schlitzförmigen Durchbrechung (20; 20') in dem als Haltescheibe ausgebildeten Drehlager (30) gehaltene Ende (50b) eines jeden Greifelementträgers (50) zum Herausklappen der Greifelementträger (50) aus der eingeklappten Nichtbetriebsstellung in die ausgeschwenkte Betriebsstellung und zum Einklappen aus dieser in die Nichtbetriebsstellung eine Z-förmige Profilausgestaltung (52) mit einem in einem rechten Winkel zu dem geradlinig verlaufenden Abschnitt (50c) des Greifelementträgers (50) abgebogenen ersten Endabschnitt (53) und mit einem in einem rechten Winkel zu dem ersten Endabschnitt (53) abgebogenen und parallel zu dem geradlinig verlaufenden Abschnitt (50c) verlaufenden zweiten Endabschnitt (54) aufweist, wobei der Greifelementträger (50) in seinem dem Trägerelement (10) zugekehrten Ende (50b) zwischen dem Trägerelement (10) und der Reifenseitenwandfläche (112) in die schlitzförmige Durchbrechung (20, 20') so eingeführt ist, dass sich der zweite Endabschnitt (54) der Z-förmigen Profilausgestaltung (52) des Endes (50b) des Greifelementträgers (50) auf der Außenwandfläche (11a) der Trägerelementfläche oder der Ringfläche (11) des Trägerelementes (10) oder auf der Außenwandfläche (30a) des Drehlagers (30) abstützt, wobei sich der Greifelementträger (50) im Übergangsbereich seines geradlinig verlaufenden Abschnitten (50c) mit dem ersten abgewinkelten Endabschnitt (53) der Z-förmigen Profilausgestaltung (52) des Endes (50b) des Greifelementträgers (50) an der dem Rand zugekehrten Wandfläche (11b) des Trägerelementes (10) vermittels einer wulstartigen Abstützfläche (80) abstützt, die an der die schlitzförmige Durchbrechung (20) begrenzenden Wand (20a) vorgesehen ist.

4. Gleitschutzvorrichtung nach einem der Ansprüche 1 bis 3,
**dadurch gekennzeichnet,**
**dass** jedes verdrehbare Drehlager (30) mit der schlitzförmigen Durchbrechung (20) bzw. den schlitzförmigen Durchbrechungen (20, 20') zur Halterung des Greifelementträgers (50) mit seinem Ende (50b) bevorzugterweise kreisförmig ausgebildet und in einer in der Trägeelementfläche oder der Ringfläche (11) des Trägerelementes (10) ausgebildeten bevorzugterweise kreisförmigen Durchbrechung (18) mittels Klemmsitz drehbar gehalten ist.

5. Gleitschutzvorrichtung nach Anspruch 4,
**dadurch gekennzeichnet,**
**dass** die umlaufende Wandfläche (32) eines jeden Drehlagers (30) für den Greifelementträger (50) als Ringnut (32) ausgebildet ist, in die die umlaufende Wand (18a) der das Drehlager (30) aufnehmenden kreisförmigen Durchbrechung (18) eingreift.

6. Gleitschutzvorrichtung nach einem der Ansprüche 1 bis 5,
**dadurch gekennzeichnet,**
**dass** jedes Drehlager (30) mit in dessen schlitzförmigen Durchbrechung (20) vermittels der Steckverbindung (60) gehaltenen Greifelementträgers (50) bei einem Verschwenken des Greifelementträgers (50) aus seiner radialen Reifenanlageposition um die senkrecht zu dem Drehlager (30) stehende Mittelachse (31) des Drehlagers (30) in eine seitliche Position selbsttätig in die Position zurückverschwenkbar ist, in der der Greifelementträger (50) seine radiale Anlageposition an dem Reifen einnimmt.

7. Gleitschutzvorrichtung nach Anspruch 6,
**dadurch gekennzeichnet,**
**dass** das Zurückverschwenken eines jeden Drehlagers (30) mit seinem Greifelementträger (50) um eine senkrecht zu dem Trägerelement (10) stehende Mittelachse (31) das Drehlager (30) in seine radiale Reifenanlageposition aus einer zu der Mittelachse (31) des Drehlagers (30) verschwenkten Position vermittels Federkräfte erfolgt.

8. Gleitschutzvorrichtung nach einem der Ansprüche 1 bis 7,
**dadurch gekennzeichnet,**
**dass** das auf der Reifenlauffläche (111) anliegende bzw. aufliegende Greifelement (50a) eines jeden Greifelementträgers (50) gabelartig bzw. V-förmig ausgebildet und zwei parallel zueinander verlaufende Schenkel (250, 251) mit einem zwischen den Schenkeln liegenden U-förmigen Zwischenraum (255) aufweist, dass die einander zugekehrten Längskanten (250a, 251a) der Schenkel (250, 251) parallel zueinander verlaufen und die äußeren Längsseitenkanten (250b, 251b) der Schenkel schräg verlaufend zu der Radachse (260) sind und dass jeder Schenkel (250, 251) mindestens zwei Spikes (51) aufweist, die im Abstand voneinander und hintereinander liegend sind.

9. Gleitschutzvorrichtung nach einem der Ansprüche 1 bis 8,
**dadurch gekennzeichnet,**
**dass** das auf der Reifenlauffläche (111) anliegende bzw. aufliegende Greifelement (50a) eines jeden Greifelementträgers (50) gabelartig bzw. V-förmig ausgebildet ist, wobei die beiden Schenkel (250', 251') des Greifelementes (50a) derart gespreizt ausgebildet sind, dass sie sich unter Ausbildung eines etwa V-förmigen Zwischenraumes (255') zur Innenseite des Rades hin konisch erweitern, so dass die Schenkel (250', 251') schräg zu der Radachse (260) verlaufend sind, wobei die äußeren Längsseitenkanten (250'b, 251'b) und die einander zugekehrten inneren Längskanten (250'a, 251'a) in etwa parallel zueinander verlaufen.

10. Gleitschutzvorrichtung nach einem der Ansprüche 1 bis 9,
**dadurch gekennzeichnet,**
**dass** die äußeren Längsseitenkanten (250b, 251b) der Schenkel (250, 251) des Greifelementes (50a) parallel oder nach außen hin nach innen hin sich erweiternd verlaufen und dass die Oberflächen der Schenkel (250, 251; 250', 251') der auf der Reifenlauffläche (111) anliegenden Greifelementes (50a) konturenerhabene Profilierungen (270) mit sich kreuzenden Profilstegen aufweisen, wobei in den jeweiligen Kreuzungspunkten der Profilstege Spikes (51) angeordnet sind.

11. Gleitschutzvorrichtung nach einem der Ansprüche 1 bis 10,
**dadurch gekennzeichnet,**
**dass** die Anordnung von vier Spikes (51) an den Schenkeln (250, 251; 250', 251') des Greifelementes (50a) derart ist, dass die Spikes (51) des einen Schenkels (250, 250') und die Spikes (51) des anderen Schenkels (251, 251') zueinander versetzt sind, wobei die jeweils sich gegenüberliegenden Spikes (51) auf einer Linie liegen, die zur Mittelachse des Gleitelementes (50a) schräg verlaufend ist.

12. Gleitschutzvorrichtung nach einem der Ansprüche 1 bis 11,
**dadurch gekennzeichnet,**
**dass** die Spikes (51) eines jeden Schenkels (250, 251; 250', 251') in den Schnittpunkten der konturenerhabenen Profilierungen (270) angeordnet sind.
